# EUROPÄISCHE PATENTSCHRIFT

(11) **EP 4 229 477 B1**
(45) Veröffentlichungstag und Bekanntmachung des Hinweises auf die Patenterteilung: **25.03.2026**
(21) Anmeldenummer: 21790197.4
(22) Anmeldetag: 11.10.2021
(51) Int. Cl.: G02F 1/13, G02F 1/1335, B60K 35/00, G02B 5/00, G02B 6/00, G02B 27/30, B60K 35/22, B60K 35/60, G02B 5/30, G02B 17/00, G02F 1/29

(54) **OPTISCHES ELEMENT UND VERFAHREN ZU SEINER HERSTELLUNG**
OPTICAL ELEMENT AND METHOD FOR MANUFACTURING THE SAME
ELÉMENT OPTIQUE ET SON PROCÉDÉ DE FABRICATION

(30) Priorität: 13.10.2020 DE 102020006442
(43) Veröffentlichungstag der Anmeldung: 23.08.2023
(73) Patentinhaber: Sioptica GmbH, 07745 Jena (DE)
(72) Erfinder: BREGULLA, Andreas, 07745 Jena (DE); HEBER, André, 07745 Jena (DE); KLIPPSTEIN, Markus, 07751 Jena (DE)
(74) Vertreter: Gleim Petri Patent- und Rechtsanwaltspartnerschaft mbB
(86) Internationale Anmeldenummer: PCT/EP2021/078013
(87) Internationale Veröffentlichungsnummer: WO 2022/078942

(56) Entgegenhaltungen:
- WO-A1-2020/055390
- US-A1- 2005 174 529
- US-A1- 2012 234 371
- US-A1- 2019 162 990
- US-A1- 2020 049 864

## Beschreibung

### Technisches Gebiet der Erfindung

In den letzten Jahren wurden große Fortschritte zur Verbreiterung des Sehwinkels bei LCDs erzielt. Allerdings gibt es oft Situationen, in denen dieser sehr große Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dem entsprechend brauchen die Menschen eine Kontrolle darüber, wer diese sensiblen Daten sehen darf; sie müssen wählen können zwischen einem weiten Betrachtungswinkel, um Informationen auf ihrem Display mit anderen zu teilen, z.B. beim Betrachten von Urlaubsfotos oder auch für Werbezwecke. Andererseits benötigen sie einen kleinen Betrachtungswinkel, wenn sie die Bildinformationen vertraulich behandeln wollen.

Eine ähnliche Problemstellung ergibt sich im Fahrzeugbau: Dort darf der Fahrer bei eingeschaltetem Motor nicht durch Bildinhalte, wie etwa digitale Entertainmentprogramme, abgelenkt werden, während der Beifahrer diese jedoch auch während der Fahrt konsumieren möchte. Mithin wird ein Bildschirm benötigt, der zwischen den entsprechenden Darstellungsmodi umschalten kann.

### Stand der Technik

Zusatzfolien, die auf Mikro-Lamellen basieren, wurden bereits für mobile Displays eingesetzt, um deren visuellen Datenschutz zu erreichen. Allerdings waren diese Folien nicht (um)schaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

Die US 6,765,550 B2 beschreibt einen solchen Sichtschutz durch Mikro-Lamellen. Größter Nachteil ist hier die mechanische Entfernung bzw. der mechanische Anbau des Filters sowie der Lichtverlust im geschützten Modus.

In der US 5,993,940 A wird der Einsatz einer Folie beschrieben, die auf ihrer Oberfläche gleichmäßig angeordnete, kleine Prismenstreifen hat, um einen Privacy-Modus zu erzielen. Entwicklung und Herstellung sind recht aufwendig.

In der WO 2012/033583 A1 wird die Umschaltung zwischen freier und eingeschränkter Sicht vermittels der Ansteuerung von Flüssigkristallen zwischen sogenannten "chromonischen" Schichten erzeugt. Hierbei entsteht ein Lichtverlust und der Aufwand ist recht hoch.

Die US 2012/0235891 A1 beschreibt ein sehr aufwendiges Backlight in einem Bildschirm. Dort kommen gemäß Fig.1 und 15 nicht nur mehrere Lichtleiter zum Einsatz, sondern auch weitere komplexe optische Elemente wie etwa Mikrolinsenelemente 40 und Prismenstrukturen 50, die das Licht von der hinteren Beleuchtung auf dem Weg zur vorderen Beleuchtung umformen. Dies ist teuer und aufwendig umzusetzen und ebenso mit Lichtverlust verbunden. Gemäß der Variante nach Fig.17 in der US 2012/0235891 produzieren beide Lichtquellen 4R und 18 Licht mit einem schmalen Beleuchtungswinkel, wobei das Licht von der hinteren Lichtquelle 18 erst aufwändig in Licht mit einem großen Beleuchtungswinkel, umgewandelt wird. Diese komplexe Umwandlung ist - wie weiter oben schon bemerkt - stark helligkeitsmindernd.

Gemäß der JP 2007-155783 A werden spezielle, aufwändig zu berechnende und herzustellende optische Oberflächen 19 genutzt, die dann Licht je nach Lichteinfallswinkel in verschiedene schmale oder breite Bereiche ablenken. Diese Strukturen ähneln Fresnel-Linsen. Ferner sind Störflanken vorhanden, die Licht in unerwünschte Richtungen ablenken. Somit bleibt unklar, ob wirklich sinnvolle Lichtverteilungen erreicht werden können.

In der US 2013/0308185 A1 wird ein spezieller, mit Stufen ausgebildeter Lichtleiter beschrieben, der Licht auf einer Großfläche in verschiedene Richtungen abstrahlt, je nachdem, aus welcher Richtung er von einer Schmalseite aus beleuchtet wird. Im Zusammenspiel mit einem transmissiven Bildwiedergabeeinrichtung, z.B. einem LC-Display, kann somit ein zwischen freiem und eingeschränktem Sichtmodus schaltbarer Bildschirm erzeugt werden. Nachteilig ist hierbei u.a., dass der eingeschränkte Sichteffekt entweder nur für links/rechts oder aber für oben/unten, nicht aber für links/rechts/oben/unten gleichzeitig erzeugt werden kann, wie es etwa für bestimmte Zahlungsvorgänge nötig ist. Hinzu kommt, dass auch im eingeschränkten Sichtmodus aus geblockten Einblickwinkeln immer noch ein Restlicht sichtbar ist.

Die WO 2015/121398 A1 der Anmelderin beschreibt einen Bildschirm mit zwei Betriebsarten, bei dem für die Umschaltung der Betriebsarten essenziell Streupartikel im Volumen des entsprechenden Lichtleiters vorhanden sind. Die dort gewählten Streupartikel aus einem Polymerisat weisen jedoch in der Regel den Nachteil auf, dass Licht aus beiden Großflächen ausgekoppelt wird, wodurch etwa die Hälfte des Nutzlichtes in die falsche Richtung, nämlich zur Hintergrundbeleuchtung hin, abgestrahlt und dort aufgrund des Aufbaus nicht in hinreichendem Umfang recycelt werden kann. Überdies können die im Volumen des Lichtleiters verteilten Streupartikel aus Polymerisat unter Umständen, insbesondere bei höherer Konzentration, zu Streueffekten führen, die den Sichtschutzeffekt in der geschützten Betriebsart vermindern.

Den vorgenannten Verfahren und Anordnungen ist in der Regel der Nachteil gemein, dass sie die Helligkeit des Grundbildschirms deutlich reduzieren und/oder ein aufwändiges und teures optisches Element zur Modi-Umschaltung benötigen und/oder nur eingeschränkten Sichtschutz bieten und/oder die Auflösung im frei betrachtbaren Modus reduzieren und/oder nur schmale Betrachtungsbereiche zulassen, der Helligkeit über das Winkelspektrum so rasch abnimmt, dass ein Betrachter ein bezüglich der Helligkeit sehr inhomogenes Bild sieht.

Weiteren Stand der Technik bildet die Druckschrift WO 2020/055390 A1, die sich auf Datenschutzfolien für elektronische Anzeigen bezieht.

### Beschreibung der Erfindung

Es ist daher Aufgabe der Erfindung, ein flächig ausgedehntes optisches Element zu entwickeln, welches einfallendes Licht in seinen Ausbreitungsrichtungen definiert beeinflussen kann, und welches optional zwischen mindestens zwei Betriebszuständen - einem freien Betrachtungsmodus und einem Sichtschutzmodus - umschalten kann, wobei im Sichtschutzmodus das Licht nur in einen gegenüber dem freien Betrachtungsmodus eingeschränkten Winkelbereich, d.h. mit weniger Ausbreitungsrichtungen, aus dem optischen Element tritt. Das optische Element soll preiswert umsetzbar und insbesondere mit verschiedenartigen Bildschirmtypen universell verwendbar sein, um eine Umschaltung zwischen einem Sichtschutz- und einem freien Betrachtungsmodus zu ermöglichen, wobei die Auflösung eines solchen Bildschirms im Wesentlichen nicht oder nur vernachlässigbar herabgesetzt werden soll. Ferner soll das optische Element grundsätzlich die Möglichkeit bieten, eine Top-Hat-Lichtverteilung zu erzielen. Damit ist gemeint, dass die Helligkeit in einem Winkelbereich von wenigstens 7 Grad um den mittleren Emissionswinkel herum nicht mehr als 15 Prozent abnimmt.

Diese Aufgabe wird durch ein flächig ausgedehntes optisches Element gemäß Anspruch 1 gelöst. Vorteilhafte Ausgestaltungen sind in den abhängigen Ansprüchen aufgeführt.

An der Lichteintrittsseite auf das optische Element auftreffendes Licht fällt aufgrund der ersten Schichten, wenn diese in einem opaken Zustand sind, ausschließlich durch die Lichteintrittsflächen der ersten Bereiche in das optische Element ein und wird dort je nach Einfallswinkel, Polarisation und dem Verhältnis der ersten Brechzahl zu der zweiten Brechzahl a) innerhalb eines ersten Bereiches ungehindert propagiert oder totalreflektiert und hernach an einer Lichtaustrittsfläche des entsprechenden ersten Bereiches wieder ausgekoppelt, oder b) dringt von dem ersten Bereich in einen angrenzenden zweiten Bereich ein, propagiert in diesem und wird schließlich an dessen Lichtaustrittsseite absorbiert, wenn die zweite Schicht im opaken Zustand ist, oder wird ausgekoppelt, wenn die zweite Schicht im transparenten Zustand ist, oder c) falls das Licht von dem ersten Bereich in den angrenzenden Bereich eingedrungen ist, dringt es wiederum in einen weiteren benachbarten ersten Bereich ein und wird je nach dann gegebener Ausbreitungsrichtung und Polarisation an der Lichtaustrittsfläche ausgekoppelt oder propagiert weiter im optischen Element, bis es entweder ausgekoppelt oder absorbiert wird. Ungehinderte Propagation im Fall a) bedeutet dabei, dass die Lichtstrahlen nicht auf eine Bereichsgrenze treffen, sondern gerade durch den ersten Bereich laufen, ohne totalreflektiert zu werden.

Im Ergebnis ist das an der Lichtaustrittsseite aus dem optischen Element austretende Licht gegenüber dem an der Lichteintrittsseite auf das optische Element auftreffende Licht in seinen Ausbreitungsrichtungen eingeschränkt, sofern mindestens eine der beiden Schichten, die erste und/oder die zweite Schicht, bevorzugt aber die zweite Schicht, opak sind.

Mit dem Einfallswinkel eines Lichtstrahles in die ersten Bereiche ist insbesondere dessen Richtungsvektor gemeint, der den horizontalen und vertikalen Einfallswinkel auf die Lichteintrittsfläche - auch als "untere Oberfläche" bezeichnet - eines ersten Bereichs beschreibt und neben dem Polarisationszustand ganz wesentlich für die weitere Propagation des Lichtes in dem ersten Bereich B1 bzw. an den Grenzflächen zu zweiten Bereichen ist.

Grundsätzlich sollen unter die Fälle c) all diejenigen Lichtstrahlen fallen, die nicht unter die Fälle a) oder b) fallen.

Mit der "periodischen Abfolge" der ersten und zweiten Bereiche ist nicht gemeint, dass diese immer gleich breit und/oder hoch sein müssen, sondern dass sich die ersten und zweiten Bereiche lediglich stets abwechseln. Ihre Größe kann jedoch variieren.

Der dritte Fall c) tritt nur ein, falls das Licht von dem ersten Bereich in den angrenzenden zweiten Bereich eingedrungen ist und von dort wiederum in einen weiteren benachbarten ersten Bereich eindringt, d.h. für die Strahlen, die nach Überwinden der Brechzahlgrenze vom ersten Bereich in den zweiten Bereich wiederum die nächste Brechzahlgrenze von dem betreffenden zweiten Bereich zum auf der anderen Seite benachbarten ersten Bereich überwinden und je nach dann gegebener Ausbreitungsrichtung und Polarisation an der Lichtaustrittsfläche ausgekoppelt werden oder weiter im optischen Element propagieren, bis sie entweder ausgekoppelt oder absorbiert werden. Dieser Fall ist für spezielle Anwendungsfälle von Interesse, etwa wenn Lichtausbreitungsrichtungen in mittleren Winkeln von zum Beispiel ca. 30° bis 50° absorbiert werden sollen, größere und kleinere Winkelbereiche als diese jedoch mit Licht beaufschlagt werden sollen. Die unter c) genannten Fälle können auf Basis optischer Simulation des optischen Elements durch geeignete Dimensionierung der ersten und zweiten Brechzahlen sowie geeignete Wahl der Breiten der ersten und zweiten Bereiche sowie deren Höhe ein- oder ausgeschlossen werden. Dazu folgen weiter unten noch Details.

Für die Erzielung der erfindungsgemäßen und bevorzugten Einschränkung der Ausbreitungsrichtungen des einfallenden Lichtes (d.h. es sind nur noch die Fälle a) der Strahlen vorhanden) ist es wichtig, dass die ersten und zweiten Schichten tatsächlich opak sind. Sobald eine der Schichten nicht opak ist, können schräge Lichtstrahlen oberhalb des eigentlichen Grenzwinkels der Totalreflexion an der Grenzfläche zwischen einem ersten Bereich und einem zweiten Bereich entweder an der oberen Kante der zweiten Bereiche austreten, oder aber sie können ggf. bei Eintritt in zweite Bereiche nachfolgend über beispielsweise die Oberkanten, d.h. die Lichtaustrittsflächen der ersten Bereiche B1 austreten.

Vorteilhafte Ausgestaltungen sind derart ausgestaltet, dass jede erste Schicht an den Lichtaustrittsflächen der zweiten Bereiche durch eine permanente Absorberschicht und/oder durch mindestens eine vom optischen Element weg spiegelnde Schicht ausgebildet ist. Wenn nur eine spiegelnde Schicht vorhanden ist, was im Rahmen der Erfindung möglich ist, so hat diese selbstredend ebenfalls opake Eigenschaften. Die spiegelnden Eigenschaften tragen dazu bei, die Effizienz zu erhöhen, etwa wenn ein erfindungsgemäßes optisches Element in einer Beleuchtungseinrichtung, etwa für ein LCD-Panel, eingebaut wird.

Ferner ist es möglich, dass jede zweite Schicht an der Lichtaustrittsfläche der zweiten Bereiche durch eine permanente Absorberschicht ausgebildet ist. Weisen dann in bestimmten, statischen Ausgestaltungen die ersten und zweiten Schichten permanente opake Eigenschaften auf und sind die ersten und zweiten Brechzahlen unveränderbar, so wirkt das optische Element permanent einschränkend auf die Ausbreitungsrichtungen des auf es einfallenden Lichtes.

In einer besonderen Ausgestaltung des erfindungsgemäßen optischen Elements ist die erste Brechzahl (N1) des Materials in den ersten Bereichen (B1) und/oder die zweite Brechzahl (N2) des Materials in den zweiten Bereichen (B2) zwischen mindestens zwei Zuständen umschaltbar ist, so dass das Verhältnis der beiden Brechzahlen (N1, N2) an den Grenzen zwischen den ersten Bereichen (B1) und den zweiten Bereichen (B2) jeweils modulierbar sind, wodurch die besagte Einschränkung der Ausbreitungsrichtungen variierbar ist.

Dazu kann mindestens eines der Materialien der ersten und/oder zweiten Bereiche aus Flüssigkristallen bestehen, die mit Elektroden in Kontakt stehen, um über eine Änderung der Spannung an den Elektroden eine Brechzahländerung für linear polarisiertes Licht in den Flüssigkristallen herbeizuführen. Die Elektroden können, wenn Sie beispielsweise an der Lichtaustrittsfläche und der Lichteintrittsfläche - der Ober- und Unterseite - der ersten Bereiche angeordnet sind, transparent sein, wie z.B. in Form von Indiumzinnoxid-Schichten (ITO-Schichten). Sind die Elektroden jedoch nötig, um die zweite Brechzahl der zweiten Bereiche zu verändern, dann kann es auch - insbesondere im Falle von als permanente Absorberschichten ausgebildeten ersten und zweiten Schichten sein -, dass nicht-transparente, ggf. sogar opake Elektroden, zum Einsatz kommen.

Für diese Ausgestaltung mit Flüssigkristallen ist es zu bevorzugen, dass die erste und zweite Schicht permanent opak sind, so dass ferner in der Regel ausschließlich die Lichtstrahlen des Falles a) das optische Element nach oben verlassen können. Allerdings weisen diese Strahlen des Falles a) je nach Brechzahldifferenz an den Grenzflächen vom ersten zum zweiten Bereich einen schmaleren oder breiteren Winkelbereich der Ausbreitungsrichtungen auf. Dieser Winkelbereich ist umso breiter, je größer die Brechzahldifferenz ist und umso kleiner, je kleiner die Brechzahldifferenz ist.

Ist hingegen in anderen, andersartig schaltbaren Ausgestaltungen der Erfindung die erste Schicht und/oder die zweite Schicht zwischen einem opaken und einem transparenten Zustand umschaltbar, so ist die Eigenschaft der Einschränkung der Ausbreitungsrichtungen des auf das optische Element einfallenden Lichtes zu- und abschaltbar: Ausschließlich in dem Fall, dass beide Schichten opak sind, werden die Lichtausbreitungsrichtungen eingeschränkt (Fall a)). Sobald eine der beiden Schichten nicht opak ist, liegt die Einschränkung der Lichtausbreitungsrichtungen nicht mehr vor (Fälle a), b) und ggf. c)). Somit ist das optische Element schaltbar. Sollten sogar beide Schichten transparent geschaltet sein, so bewirkt das optische Element lediglich - je nach Einfallsrichtung des Lichtes - Strahlversätze und totale interne Reflexionen, blockt aber insgesamt kein Licht ab.

In bevorzugten schaltbaren Ausgestaltungen wird nur die obere, zweite Schicht opak-transparent umschaltbar gestaltet, während die untere, erste Schicht permanent opak (und ggf. auch reflektierend) ausgebildet ist. Dies ist ausreichend, um die gewünschten Effekte zu erzielen.

Die Umschaltbarkeit der beiden Schichten kann bevorzugt basieren auf einem oder gleichzeitig mehreren der folgenden Prinzipien: Elektrobenetzung, Elektrophorese, Elektrochromie und/oder Flüssigristallzellen. Andere Ausgestaltungen sind selbstverständlich auch möglich.

Im Falle der Elektrobenetzung werden für eine mindestens eine der beiden Schichten mindestens zwei Zustände der der Elektrobenetzung unterliegenden Flüssigkeit oder Flüssigkeitsmischung definiert. In einem ersten Betriebszustand würde die betreffende Schicht die entsprechende Oberfläche eines zweiten Bereiches möglichst komplett überdecken, also opak sein (dann ist die Einschränkung der Ausbreitungsrichtungen gegeben, Fall a)) und in einem zweiten Betriebszustand würde die betreffende Schicht die entsprechende Oberfläche eines zweiten Bereiches nur auf kleinstmöglicher Fläche überdecken, also weitestgehend transparent sein (dann ist die Einschränkung der Ausbreitungsrichtungen nicht bzw. nur vernachlässigbar gegeben, Fälle a), b) und ggf. c)).

Im Falle von Elektrophorese würden für mindestens eine der beiden Schichten opake Partikel, die elektrophoretisch bewegt werden können, in einer Flüssigkeit oder Gelmatrix bereitgestellt. Aufgrund der Wirkung eines elektrischen Feldes, welches über transparente Elektroden angelegt werden kann, würden diese dann in einem ersten Betriebszustand als betreffende Schicht die entsprechende Oberfläche eines zweiten Bereiches möglichst komplett überdecken, so dass die betreffende Schicht opak wirkt (dann ist die Einschränkung der Ausbreitungsrichtungen gegeben). In einem zweiten Betriebszustand bei einer anderen elektrischen Feldverteilung würden die Partikel als betreffende Schicht die entsprechende Oberfläche eines zweiten Bereiches auf kleinstmöglicher Fläche überdecken oder in ein Reservoir überführt werden oder im Volumen verteilt sein, die Schicht also mithin transparent sein (dann ist die Einschränkung der Ausbreitungsrichtungen nicht gegeben).

Grundsätzlich ist diese Ausgestaltung unter Nutzung der Elektrophorese auch derart ausgestaltbar, dass für mindestens eine der beiden Schichten, insbesondere für die zweite Schicht, aufgrund der Partikelpositionen unmittelbar auf den zweiten Bereichen oder entfernt davon (maximal 100 µm genügen) eine Totalreflexionsstruktur an der Oberfläche der zweiten Bereiche entweder gestört - mit entsprechender Absorption des Lichtes durch die Partikel - oder nicht gestört wird - mit entsprechendem Abstand der Partikel -, so dass die Totalreflexion stattfindet und die entsprechenden Strahlen nach weiterer Propagation im optischen Element mindestens teilweise aus den Lichtaustrittsflächen der ersten Bereiche ausgekoppelt werden. Im Allgemeinen können in diesem Zusammenhang alle optischen Schalttechnologien angewendet werden, die auf einer solchen oder ähnlichen Variante der sogenannten "frustrated total internal reflection" basieren.

Überdies kommen als Partikel auch Januspartikel in Frage, die ortsfest aufgrund von elektrischen Feldeinwirkungen rotiert werden können und deren Oberfläche jeweils etwa zur Hälfte opak und zur anderen Hälfte streuend, weiß und/oder reflektierend sind. Diese Januspartikel können ebenso jede der beiden Schichten, um diese zwischen einem opaken und einem reflektierenden Zustand umzuschalten, wobei in letzterem Zustand aufgrund der Reflexion die entsprechenden Strahlen nach weiterer Propagation im optischen Element mindestens teilweise aus den Lichtaustrittsflächen der ersten Bereiche ausgekoppelt werden.

Im Falle von Elektrochromie würden die beiden Schichten mit elektrochromen Materialien, z.B. einiger Metalloxide (TiO₂, NiO, Nb₂O, MoO₃, Ta₂O₅, WO₃, IrO₂, Zr₂O₅), sowie entsprechenden transparenten Elektroden wie z. B. ITO (Indium Tin Oxide, Indium-dotiertes Zinnoxid), FTO (Fluorine Tin Oxide, Fluor-dotiertes Zinnoxid) oder AZO (Aluminium-dotiertes Zinkoxid), die die elektrochromen Materialien einbetten, ausgebildet. In Abhängigkeit von der an den Elektroden angelegten Spannung werden dann mindestens zwei Zustände für die beiden Schichten definiert. In einem ersten Betriebszustand ist die betreffende Schicht opak (dann ist die Einschränkung der Ausbreitungsrichtungen gegeben) und in einem zweiten Betriebszustand ist sie transparent (dann ist die Einschränkung der Ausbreitungsrichtungen nicht gegeben).

Die beiden Schichten können auch als Flüssigristallzellen, etwa als TN-Zellen mit entsprechenden Polarisator-Paaren, ausgebildet werden. Diese können dann entsprechend über das Anlegen entsprechender elektrischer Felder bzw. Spannungen an Elektroden opak (dann ist die Einschränkung der Ausbreitungsrichtungen gegeben) oder transparent (dann ist die Einschränkung der Ausbreitungsrichtungen nicht gegeben) geschaltet werden. Ein Polarisator des besagten Polarisator-Paares kann dann auch einem Polarisator eines LCD-Panels physisch entsprechen, wenn das erfindungsgemäße optische Element im Zusammenhang mit einem solchen LCD-Panel verwendet wird.

Generell gilt: Je kleiner der Brechzahlunterschied zwischen der ersten Brechzahl und der zweiten Brechzahl ist, desto schmaler ist die Lichtverteilung des das optische Element verlassenden Lichtes. Es soll hier zum klaren physikalischen Verständnis noch einmal festgehalten werden, dass mit "Brechzahl" entweder die erste oder zweite Brechzahl für eine ausgewählte Wellenlänge, z.B. 580 nm, oder aber die jeweilige Dispersionskurve über den gesamten mit dem menschlichen Auge sichtbaren Wellenlängenbereich gemeint ist. Im Falle der Dispersionskurve bedeutet der Brechzahlunterschied den jeweiligen Wert, der bei einer ausgewählten sichtbaren Wellenlänge λ der Differenz zwischen den beiden Brechzahlen entspricht.

In diesem Zusammenhang ist zu erwähnen, dass das optische Element in besonderen Ausgestaltungen als sehr exaktes, wellenlängenselektives Farbfilter ausgebildet werden kann: Wenn sich die Dispersionskurven beider Brechzahlen in Abhängigkeit von der Wellenlänge schneiden, dann würde bei opaken Schichten bei denjenigen Wellenlängen, wo die zweite Brechzahl größer als die erste Brechzahl ist, der entsprechende Wellenlängenbereich effizient ausgelöscht, also nicht aus dem optischen Element ausgekoppelt, während die Wellenlängenbereiche, für welche die erste Brechzahl größer als die zweite Brechzahl ist, aus dem optischen Element ausgekoppelt würden. Je nach Ausgestaltung der Dispersionskurven wäre dann ein solches optisches Element mit wellenlängenselektiver Wirkung mit schräg gerichtetem Licht zu betreiben, weil in jedem Falle der Grenzwinkel der Totalreflexion an den Grenzflächen zwischen ersten und zweiten Bereichen genutzt werden muss, um die Spektren zu trennen. In einer beispielhaften Weiterbildung würden dann mit einem solchen wellenlängenselektiven Farbfilter zwei Spektren, beispielsweise eines in einem schmalen UV-Bereich und eines in einem weißen, spektral weiten Bereich getrennt. Wird die Trennwirkung durch abgeschaltete Opazität der mindestens einer der beiden Schichten aufgehoben, so könnten beide Spektren durch das Farbfilter transmittiert werden. Das UV-Licht könnte hernach in sichtbares, weißes Licht konvertiert werden, so dass insgesamt für weißes Licht wiederum die Möglichkeit besteht, zwischen verschiedenen Winkelspektren umzuschalten.

In einer vorteilhaften Ausgestaltung des optischen Elements sind die ersten und zweiten Bereiche bei Betrachtung in Parallelprojektion senkrecht auf das optische Element streifenförmig abwechselnd über die Fläche des optischen Elements verteilt angeordnet. Damit würde die Einschränkung der Lichtausbreitungsrichtungen senkrecht zu den streifenförmigen Bereichen wirksam sein, nicht aber parallel zu ihnen.

Demgegenüber sieht eine andere Ausgestaltung vor, dass die ersten Bereiche bei Betrachtung in Parallelprojektion senkrecht auf das optische Element punkt-, kreis-, oval-, rechteckförmig, hexagonal oder anders zweidimensional geformt über die Fläche des optischen Elements verteilt angeordnet und die zweiten Bereiche dazu jeweils komplementär geformt sind. Damit würde die Einschränkung der Lichtausbreitungsrichtungen jeweils in mindestens zwei Ebenen, die senkrecht zu der Oberfläche des optischen Elements stehen, wirksam sein. Praktisch ist die Wirkung eines solchen optischen Elements in der Regel derart, dass die Lichtausbreitungsrichtungen für transmittiertes Licht in jedem Winkel nahe der Mittelsenkrechten des optischen Elementes bzw. parallel dazu fokussiert sind. Mit "nahe" ist in diesem Falle gemeint, dass die Abweichungen von der Mittelsenkrechten bzw. der Parallelen hierzu - je nach Ausgestaltung - weniger als 25° oder 30° betragen.

Andere Formen der ersten und zweiten Bereiche sind ebenso möglich. Wichtig für die Erhaltung der Funktionsweise der Erfindung ist dabei stets, dass die ersten und zweiten Bereiche optisch unmittelbar aneinander angrenzen, so dass ein optischer Brechzahlsprung möglichst ohne Luftspalt gegeben ist.

Weitere Ausgestaltungen sehen vor, dass die ersten und zweiten Bereiche bei Betrachtung in Schnittrichtung senkrecht zur oberen Oberfläche des optischen Elements trapezförmig ausgebildet sind. Durch derartige Ausbildungsformen der ersten und zweiten Bereiche wird eine gezielte Beeinflussung der Ausbreitungsrichtungen des aus dem optischen Element austretenden Lichtes vorgenommen: Je nach Ausgestaltung findet eine stärkere oder schwächere Fokussierung des Lichtes über die Fläche statt. Außerdem ist es möglich, etwa durch parallelogrammförmige Schnittformen der ersten und zweiten Bereiche eine Peak-Verschiebung durch die einhergehende Verkippung der Grenzflächen zwischen den ersten und zweiten Bereichen zu erzielen. Die Trapezform hat den Vorteil, dass die Winkelverteilung dadurch noch besser fokussiert wird und so der Sichtschutz-Modus weiter verbessert wird.

Ferner kann es von Vorteil sein, wenn die mindestens zeitweise opaken ersten und/oder zweiten Schichten in das Material, aus dem die ersten Bereiche bestehen, eingebettet sind, wobei bevorzugt der Materialanteil der ersten Bereiche des optischen Elements nahtlos in den besagten, die entsprechenden Schichten einbettenden Anteil, übergeht.

Es ist überdies möglich, dass auf mindestens einem Teil der ersten Bereiche, bevorzugt auf allen ersten Bereichen, an deren Lichtaustrittsseite, d.h. für einen Betrachter die Oberseite, eine Linsenstruktur aufgebracht ist, bevorzugt eine konvexe Linsenstruktur. Dies unterstützt die definierte Beeinflussung der Ausbreitungsrichtung des aus dem optischen Element austretenden Lichtes. Alternativ oder zusätzlich kann die Lichteintrittsseite, d.h. für einen Betrachter die Unterseite, der ersten Bereiche eine konkave oder konvexe Linsenstruktur aufweisen, um die Lichteintrittsrichtungen in die ersten Bereiche zu beeinflussen, und damit auch Einfluss darauf zu nehmen, ob ein Lichtstrahl schließlich unter die besagten Fälle a), b) oder c) fällt.

Grundsätzlich lassen sich im Rahmen der Erfindung die zweiten, oberen Schichten und die ersten, unteren Schichten vertauschen, d.h. das erste optische Element funktioniert, insbesondere wenn beide Schichten permanent opak sind, egal welche der Großflächen des optischen Elements oben oder unten ist.

Weiterhin kann es hilfreich sein, dass zur Optimierung des Effekts unterhalb und/oder oberhalb des optischen Elements ein Polarisator, optional ein reflektierender Polarisator, angeordnet ist. Die Kontrolle der Polarisation durch einen Polarisator erhöht die Effizienz der Nutzung der Brechzahlübergänge. Weiterhin kann die p-Polarisation des ein- oder ausfallenden Lichtes genutzt werden, um die Fresnel-Reflektionen zu minimieren, d.h. die Beschränkung der Lichtausbreitungsrichtungen zu optimieren.

Für besondere Anwendungsfälle ist es möglich, dass auf dem optischen Element mindestens ein erster Bereich ausgebildet ist, der bei Betrachtung in Parallelprojektion senkrecht auf das optische Element in seiner kürzesten Ausdehnung mindestens zwanzigmal so groß ist, wie die kürzeste Ausdehnung aller zweiten Bereiche bei Betrachtung in Parallelprojektion senkrecht auf das optische Element, so dass innerhalb des besagten mindestens einen ersten Bereiches außer an dessen Rändern und bis auf Parallelversätze keine Einschränkung der Ausbreitungsrichtungen des aus dem optischen Element austretenden Lichtes gegenüber dem auf das optische Element auftreffenden Lichtes vorliegt. Dies bedeutet nichts anderes, als das die Einschränkung der Ausbreitungsrichtungen nicht auf der gesamten Fläche des optischen Elements wirkt. Derartige nicht einschränkende erste Bereiche können sich - ohne einander zu berühren - auch mehrfach auf dem optischen Element wiederholen.

Ferner kann es sinnvoll sein, dass zusätzlich zu den ersten und zweiten Bereichen weitere Bereiche mit anderen Parametern hinsichtlich Form und/oder Brechzahl als die der ersten und zweiten Bereiche ausgebildet sind, so dass Licht, welches diese weiteren Bereiche durchdringt und aus dem optischen Element austritt, andere Beschränkungen der Ausbreitungsrichtungen erfährt als in den ersten Bereichen. Somit sind über das optische Element verteilt Bereiche mit unterschiedlicher Lichtausbreitungsrichtungseinschränkung, quasi mit unterschiedlicher Fokussierung, realisierbar.

Weiterhin ist es denkbar, am optischen Element zusätzliche reflektierende Schichten und/oder zusätzliche absorbierende Schichten anzubringen, um den Effekt der Einschränkung der Lichtausbreitungsrichtungen weiter zu verstärken bzw. zu modulieren. Außerdem können noch Schutzbeschichtungen bzw. Substrate auf den Lichteintritts- und/oder Lichtaustrittsseiten, d.h. oben und/oder unten am optischen Element angebracht sein. Dabei sollten allerdings die Strahlversätze und Einflüsse auf die Lichtrichtung bei der Auskopplung des Lichtes insbesondere aus den ersten Bereichen bei der technisch-optischen Dimensionierung beachtet werden.

Die Erfindung erlangt besondere Bedeutung in der Verwendung eines vorstehend beschriebenen optischen Elements mit einer Bildwiedergabeeinheit (z.B. einem LCD-Panel, einem OLED oder microLED oder jeder anderen Displaytechnologie) oder mit einer Beleuchtungseinrichtung für eine transmissive Bildwiedergabeeinheit (z.B. LCD-Panel). In letzterem Falle würde das optische Element, insbesondere in schaltbaren Ausgestaltungen, direkt in eine Beleuchtungseinrichtung für eine transmissive Bildwiedergabeeinheit wie etwa ein LCD-Panel integriert. Diese Beleuchtungseinrichtung kann dann permanent als gerichtete Hintergrundbeleuchtung wirken (wenn die ersten und zweiten Schichten permanent opak sind), und kann beispielsweise in Ausgestaltungen gemäß der WO 2015/121398 oder der WO 2019/002496 der Anmelderin eingesetzt werden. Alternativ kann eine solche Beleuchtungseinrichtung, umfassend mindestens einen Flächenstrahler und ein erfindungsgemäßes optisches Element, wenn mindestens eine der beiden Schichten zwischen einem transparenten und einem opaken Modus umschaltbar ist, auch direkt als schaltbare Beleuchtungseinrichtung für ein LCD-Panel fungieren.

Bei den vorgenannten Verwendungsansätzen wird ein schaltbarer Sichtschutz für die Bildwiedergabeeinheit erreicht: Im ersten Betriebszustand, bei dem nur die besagten Fälle a) für die aus dem optischen Element ausfallenden Strahlen verbleiben, ist ein Sichtschutz-Effekt, je nach Ausgestaltung mit einer Top-Hat-Verteilung, gegeben. Im zweiten Betriebszustand, bei dem in der Regel die Fälle a) und b), und nur in Ausnahmefällen auch noch die Fälle c) für die aus dem optischen Element austretenden Strahlen gelten, ist ein freier Sichtmodus gegeben, bei dem die Bildwiedergabeeinheit aus allen Richtungen frei betrachtbar ist.

Für den Fall, dass ein erfindungsgemäßes optisches Element in Betrachtungsrichtung vor einer Bildwiedergabeeinheit angeordnet ist, um wahlweise oder permanent deren Lichtausbreitungsrichtungen zu beschränken, kann optional auf der Bildwiedergabeeinheit noch eine Optik vorhanden sein, die das von den jeweiligen Pixeln der Bildwiedergabeeinrichtung abgestrahlte Licht im Wesentlichen auf den Flächen bündeln, die ersten Bereichen gegenüber liegen. Dies ist beispielsweise möglich mit Mikrolinsenrastern oder Lentikularen, die in etwa die Perioden der Pixelbreiten (oder ggf. Pixelhöhen) aufweisen. Die Periode der ersten Bereiche sollte dann im besten Falle mit der Periode der Pixelbreiten bzw. -höhen übereinstimmen.

Ein solcher Bildschirm, der mindestens ein optisches Element wie vorangehend beschrieben, welches auch als erstes optisches Element bezeichnet wird, und eine Bildwiedergabeeinheit umfasst, kann beispielsweise in einem PKW oder einem mobilen Gerät eingesetzt werden. Außerdem ist es ggf. auch möglich, eine Bildwiedergabeeinheit nachträglich mit einem ersten optischen Element, ob schaltbar oder nicht, umzurüsten, indem dieses vor der Bildwiedergabeeinheit angeordnet wird.

Die Erfindung umfasst auch ein Verfahren zur Herstellung eines solchen ersten optischen Elements, welches die im Folgenden beschriebenen Schritte umfasst. Zunächst wird eine Form, welche eine Positivstruktur von gewünschten ersten Bereichen sowie die Negativstruktur eines Trägersubstrates aufweist, (d.h., die zweiten Bereiche sind vom Formmaterial gefüllt, während die ersten Bereiche nicht mit Formmaterial gefüllt sind; dabei kann in der Form eine Kavität für ein Trägersubstrat vorhanden sein, welches in einem nachfolgenden Schritt insbesondere mit einem Polymer für die ersten Bereiche ausgefüllt wird). Dann wird die Form mit einem ersten Polymer befüllt, welches zunächst flüssig ist und nach Aushärten eine erste Brechzahl aufweist. 'Das erste Polymer wird dann durch UV-Licht oder durch Abkühlung ausgehärtet und nachfolgend wird das Werkstück aus der Form entfernt. Anschließend werden Strukturen von zweiten Bereichen im Werkstück mit einem zweiten Polymer befüllt, welches nach Aushärten eine zweite Brechzahl aufweist. Auch das zweite Polymer wird durch UV-Licht oder durch Abkühlung.

Optional werden nach dem Aushärten des ersten oder zweiten Polymers die zweiten Bereiche auf den Oberflächen, d.h. auf der - aus Richtung eines Betrachters gesehen - oberen und unteren Oberfläche des Werkstückes durch eine die ersten Bereiche schützende Maske hindurch mit einem opaken oder transparent-opak schaltbaren Material bedampft oder gesputtert, um die ersten bzw. zweiten Schichten zu erhalten, oder mit einem opaken Material bedruckt.

Weiterhin umfasst die Erfindung noch ein anderes Verfahren zur Herstellung eines (ersten) optischen Elements, welches die im Folgenden beschriebenen Schritte umfasst. Zunächst werden mehrere Basisblöcke erzeugt, die in dieser Reichenfolge folgende miteinander verbundene Schichten beinhalten: eine als Absorberschicht wirkende zweite Schicht, eine zweite transparente Schicht aus einem Material mit einer zweiten Brechzahl, eine opake erste Schicht sowie eine erste transparente Schicht aus einem Material mit einer ersten Brechzahl. Mehrere Basisblöcke werden dann übereinander gestapelt und verbunden, um einen ersten Stapelblock zu erhalten. Aus dem Stapelblock werden Scheiben mit einer zweiten Schichtdicke abgeschnitten. Diese Scheiben werden mit jeweils dazwischenliegenden ersten transparenten Schichten mit der ersten Brechzahl und einer ersten Schichtdicke gestapelt und verbunden, um einen zweiten Stapelblock zu erhalten. Sodann werden optische Elemente aus dem zweiten Stapelblock abgeschnitten. Die erste Schicht kann dabei bevorzugt reflektierend ausgebildet werden. Die Basisblöcke können beispielsweise miteinander und/oder die Scheiben mit den ersten transparenten Schichten durch Vulkanisieren verbunden werden. Das Abschneiden der Scheiben aus dem ersten Stapelblock und/oder von optischen Elementen aus dem zweiten Stapelblock erfolgt bevorzugt senkrecht zu einer Flächenausdehnungsebene der einzelnen Schichten.

In besonderen Ausgestaltungen des optischen Elements kann die zweite transparente Schicht mit der zweiten Brechzahl auch absorbierend gewählt werden. Dann kann die als Absorberschicht wirkende zweite Schicht entfallen.

Weitere alternativ denkbare Produktionsmethoden wären beispielsweise die Verwendung zweier Polymere, um in einem 3D-Druckverfahren die ersten und zweiten Bereiche B1 und B2 mit jeweils verschiedenen Brechungsindizes auszugestalten, das Ätzen von Glas, wobei die geätzten Bereiche (entweder die ersten Bereiche oder die zweiten Bereiche) vorzugsweise im Nachgang mit einem Polymer aufgefüllt werden, die unterschiedliche Vernetzung von Polymeren, sowie die Nutzung fotoausgerichteter Moleküle. In allen Fällen folgt dann noch die Aufbringung der ersten und zweiten Schichten, etwa wie vorstehend beschrieben. Selbstredend sind auch andere Herstellungsverfahren für ein optisches Element möglich.

Die Aufgabe der Erfindung wird auch gelöst von einem Verfahren zur Einschränkung der Lichtausbreitungsrichtungen sich flächig ausbreitenden Lichtes im für das menschliche Auge sichtbaren Wellenlängenbereich, welches die im Folgenden beschriebenen Schritte umfasst. In einem ersten Schritt wird das Licht mittels einer flächenförmigen Apertur, welche mindestes transparente erste Bereiche und opake zweite Bereiche, die sich über die Fläche der Apertur in einer ein- oder zweidimensionalen periodischen Abfolge abwechseln, enthält, flächig moduliert. Im gesamten Wellenlängenbereich erfolgt eine brechzahlbasierte, winkelabhängige Aufspaltung des durch die transparenten ersten Bereiche propagierenden Lichtes in Strahlen, die innerhalb - d.h. mit einem Winkel kleiner als der Grenzwinkel der Totalreflexion - der Grenzwinkel der Totalreflexion an einer Brechzahlgrenze reflektiert und schließlich - d.h. nach einmaliger oder mehrmaliger Totalreflexion oder auch ungehinderter Propagation - ausgekoppelt werden, und in Strahlen, die außerhalb der Grenzwinkel der Totalreflexion - d.h. mit einem Winkel, der größer als der Grenzwinkel der Totalreflexion für diese Materialkombination ist - die besagte Brechzahlgrenze durchdringen, weiter propagieren und hernach von einem Absorber absorbiert werden, so dass das ausgekoppelte Licht gegenüber dem ursprünglich sich flächig ausbreitenden Licht eingeschränkte Lichtausbreitungsrichtungen aufweist.

Die weiter oben stehenden Erläuterungen zum erfindungsgemäßen (ersten) optischen Element in verschiedenen Ausgestaltungen sind hier sinngemäß anzuwenden, wobei die ersten und zweiten Bereiche bzw. hier einander im übertragenen Sinne entsprechen können. Eine detaillierte Erläuterung wird aus Redundanzgründen hier nicht gegeben.

Die Erfindung umfasst ferner auch noch ein optisches Element, das aus einer ein- oder zweidimensionalen periodischen Abfolge von zwei transparenten komplementären Formen mit jeweils verschiedenen Brechzahlen besteht, wobei die Formen optional auf einem flächigen Substrat ausgebildet sind, und somit in zwei Richtungen jeweils eine Ebene bilden. Dabei kann die eine Brechzahl vorteilhaft gleich eins sein, d.h. das Material in den einen Formen ist beispielsweise Luft. Somit wird Licht, welches unter einer Vorzugsrichtung auf ein solches optisches Element trifft, ungehindert transmittiert, während Licht, welches einen Winkel von mehr als 15° zur besagten Vorzugsrichtung aufweist, durch das optische Element auf Grund von Totalreflexion und/oder Fresnel-Reflexionen abgelenkt wird. Auch hier werden die Ausbreitungsrichtungen des ausfallenden Lichtes beeinflusst. Die weiter vorn stehenden Ausgestaltungen können analog angewendet werden und sollen daher an dieser Stelle nicht nochmals wiederholt werden.

Schließlich umfasst die Erfindung noch ein flächig ausgedehntes weiteres optisches Element gemäß Anspruch 8. Vorteilhafte Ausgestaltungen sind in den abhängigen Ansprüchen aufgeführt. Dieses umfasst mindestens aus einem transparenten Material mit einer ersten Brechzahl bestehende erste Bereiche und aus einem opaken Material mit einer zweiten Brechzahl bestehende zweite Bereiche, die sich über die Fläche des optischen Elements in einer ein- oder zweidimensionalen periodischen Abfolge abwechseln, wobei die erste Brechzahl im gesamten für ein menschliches Auge sichtbaren Wellenlängenbereich größer ist als die zweite Brechzahl. An einer ersten Großfläche des optischen Elements auf dieses auftreffende Licht fällt aufgrund des opaken Materials der zweiten Bereiche ausschließlich durch Lichteintrittsflächen der ersten Bereiche in das optische Element ein. Je nach geometrischer Einfallrichtung, Polarisation und dem Verhältnis der ersten Brechzahl zu der zweiten Brechzahl entweder a) propagiert das Licht innerhalb eines ersten Bereiches ungehindert oder wird totalreflektiert und wird hernach an einer Lichtaustrittsfläche des entsprechenden ersten Bereiches wieder ausgekoppelt, oder b) dringt von dem ersten Bereich in einen angrenzenden zweiten Bereich ein und wird dort aufgrund des opaken Materials der zweiten Bereiche absorbiert wird. Dabei werden aufgrund der unterschiedlichen ersten Brechzahlen und zweiten Brechzahlen in zweite Bereiche eindringende Strahlen stärker vom Lot weg gebrochen. wodurch die Absorption solchen Lichts gegenüber Materialien mit gleichen Brechzahlen verbessert wird. Solche Strahlen werden also besser oder stärker ausgelöscht als ohne einen Brechzahlunterschied. Insgesamt ist dadurch das an der an einer zweiten Großfläche des optischen Elements aus diesem austretende Licht gegenüber dem an der ersten Großfläche auf das optische Element auftreffende Licht in seinen Ausbreitungsrichtungen eingeschränkt.

Diese Ausgestaltung verbessert den Stand der Technik insbesondere dahingehend, dass erstens auch mit optischen Elementen, die Lamellenfiltern ähnlich sind, eine Top-Hat-Verteilung erreicht werden, da aufgrund der Totalreflexion mehr Nutzlicht in die gewünschten eingeschränkten Winkelbereiche transmittiert wird, als - wie im Stand der Technik üblich - ohne die Totalreflexion, und dass zweitens die Einschränkung der Winkelbereiche des das dritte optische Element durchdringenden Lichtes deutlich stärker ist, weil nicht allein die opaken Lamellen für die Lichtrichtung sorgen, sondern auch der Brechzahlunterschied zwischen den zwei Bereichen dafür sorgt, dass in zweite Bereiche eindringende Strahlen stärker vom Lot weg gebrochen und somit einen längeren optischen Weg durch das absorbierende Material zurücklegen müssten, mithin also stärker ausgelöscht werden, als ohne einen solchen Brechzahlunterschied.

Das opake Material mit der zweiten Brechzahl wird so bezeichnet, weil es in seiner Wirkung opak ist. Konkret handelt es sich eigentlich um ein transparentes Material, welches die zweite Brechzahl aufweist, welches jedoch seinerseits mit einem absorbierenden Material, insbesondere absorbierenden Partikeln versetzt ist, wodurch insgesamt eine opake Wirkung zustande kommt, anders ausgedrückt handelt es sich bei dem opaken Material um ein Material mit transparenten und opaken Anteilen. Das opake Material kann beispielsweise aus einem Lack oder Polymer als transparentem Anteil bestehen, welches für den opaken Anteil beispielsweise mit Graphitpartikeln, die eine Größe von weniger als 500 nm in Richtung ihrer größten Ausdehnung aufweisen, oder Nanopartikeln aus schwarzem Kohlenstoff, die eine Größe von weniger als 200 nm aufweisen, beispielsweise mit Rußpartikeln, versetzt sein. Alternativ oder in Kombination kann der opake Anteil des opaken Materials auch Farbstoffe oder Gemische von Farbstoffen enthalten. Ein geeigneter Farbstoff ist beispielsweise Sudanschwarz, der im sichtbaren Bereich sämtliches Licht absorbiert. Der Masseanteil der absorbierenden Partikel im opaken Material sollte im Regelfall bei nicht mehr als 50 % liegen. Ausnahmen sind jedoch möglich.

In einer bevorzugten Ausgestaltung sind zwischen jeweils zwei zweiten Bereichen dritte Bereiche aus einem weiteren opaken Material mit einer dritten Brechzahl ausgebildet sind, wobei die dritte Brechzahl jeweils größer als die erste Brechzahl und größer als die zweite Brechzahl ist. Der Brechzahlunterschied zwischen der ersten und zweiten Brechzahl sollte in diesem besonderen Fall bevorzugt nicht größer als 0,1 sein, hingegen ist ein großer Unterschied zwischen erster und dritter Brechzahl für die Effektivität wünschenswert. Außerdem können zweite Bereiche auch zwischen der Lichteintrittsseite des optischen Elements und den dritten Bereichen einerseits und zwischen der Lichtaustrittsseite des optischen Elements und den Lichtaustrittsflächen der ersten Bereiche andererseits ausgebildet sein. Auf diese Weise lässt sich die Fokussierung des Winkelbereichs, in welchem Licht abgestrahlt wird, weiter verstärken und damit der Sichtschutz-Modus verbessern.

Das weitere opake Material mit der dritten Brechzahl ist dabei ähnlich aufgebaut wie das opake Material mit der zweiten Brechzahl, d.h. es umfasst einen transparenten und einen opaken Anteil mit höchstens 50 % Masseanteil der absorbierenden Partikel. Bei dieser Ausgestaltung mit drei verschiedenen Materialien kann der Masseanteil der absorbierenden Partikel im opaken Material mit der zweiten Brechzahl auch deutlich geringer als 50 % ausfallen, sofern er im weiteren opaken Material mit der dritten Brechzahl ausreichend hoch ist.

Dieses eben beschriebene optische Element kann vorteilhaft an einer der Großflächen, bevorzugt an der unteren Großfläche, eine Verspiegelung enthalten, wobei es sich dabei entweder um eine winkelabhängige Verspiegelung der gesamten Großfläche oder um eine Vollverspiegelung an den Oberflächen der zweiten Bereiche handelt. Die für das anfangs beschrieben optische Element gemachten Ausführungen hinsichtlich besonderer Ausgestaltungen lassen sich auch auf dieses optische Element anwenden und sollen daher nicht wiederholt werden.

Diesbezüglich umfasst die Erfindung außerdem ein Verfahren zur Herstellung des zuletzt beschriebenen optischen Elements, welches die im Folgenden beschriebenen Schritte umfasst. Abwechselnd werden erste, aus einem transparenten Material bestehende Schichten mit einer ersten Brechzahl, und zweite, aus einem opaken Material bestehende Schichten mit einer zweiten Brechzahl gestapelt, wobei die erste Brechzahl größer als die zweite Brechzahl ist. Diese ersten und zweiten Schichten werden dann miteinander verbunden, beispielsweise durch Vulkanisieren oder Kleben. Zum Schluss werden optische Elemente aus dem Schichtverbund abgeschnitten.

Generell gilt bei allen optischen Elementen, dass die Rauigkeit Rₐ an den Grenzflächen zwischen Bereichen mit verschiedenen Brechzahlen bevorzugt kleiner gleich 20 nm sein sollte.

Die verschiedenen vorbeschriebenen Ausgestaltungen der Erfindung können auch direkt auf einer selbststrahlenden Bildwiedergabeeinheit umgesetzt werden. Besonders geeignet sind dabei OLEDs-Panels, die im Folgenden näher beschrieben werden. Jedoch sind auch andere selbststrahlende Displayarten denkbar.

Die Implementierung kann beispielsweise folgendermaßen erfolgen: Direkt auf den leuchtenden Bereich eines OLED-Pixels werden die ersten Bereiche aus einem Material mit der ersten Brechzahl aufgebracht. Auf die nicht-leuchtenden Bereiche des OLED-Panels werden die zweiten Bereiche mit zu den ersten Bereichen komplementären Strukturen aufgebracht, die mit einer mindestens zeitweise - d.h. permanent oder schaltbar - opaken ersten und/oder zweiten Schicht bedeckt sind. Die ersten Bereiche sind nicht mit streuenden Strukturen bedeckt, um die Lichtausbeute aus den OLED-Pixeln zu erhöhen, bevorzugt aber die Oberseite der mindestens zeitweise opaken ersten und zweiten Schichten.

Grundsätzlich bleibt die Leistungsfähigkeit der Erfindung erhalten, wenn die vorbeschriebenen Parameter in bestimmten Grenzen variiert werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:

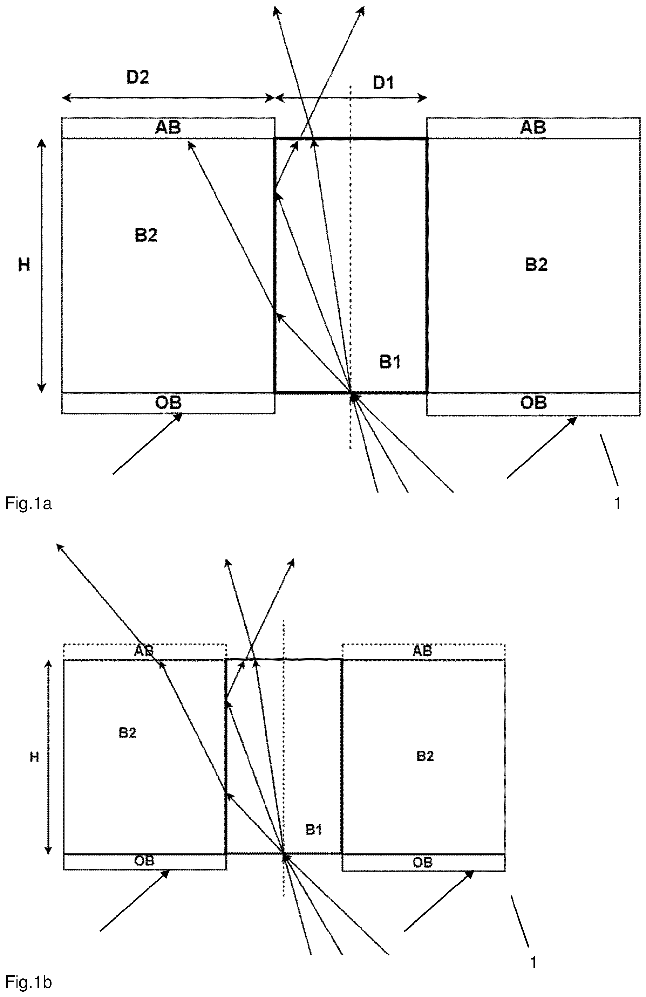

Fig. 1a die Prinzipskizze (Schnittdarstellung) eines ersten optischen Elements in einer ersten Ausgestaltung in einem ersten Zustand, in dem nur Strahlen eines Falles a) aus dem optischen Element ausgekoppelt werden,
Fig. 1b die Prinzipskizze (Schnittdarstellung) eines ersten optischen Elements in einer ersten Ausgestaltung in einem zweiten Zustand, in dem nur Strahlen von Fällen a) und b) aus dem optischen Element ausgekoppelt werden,

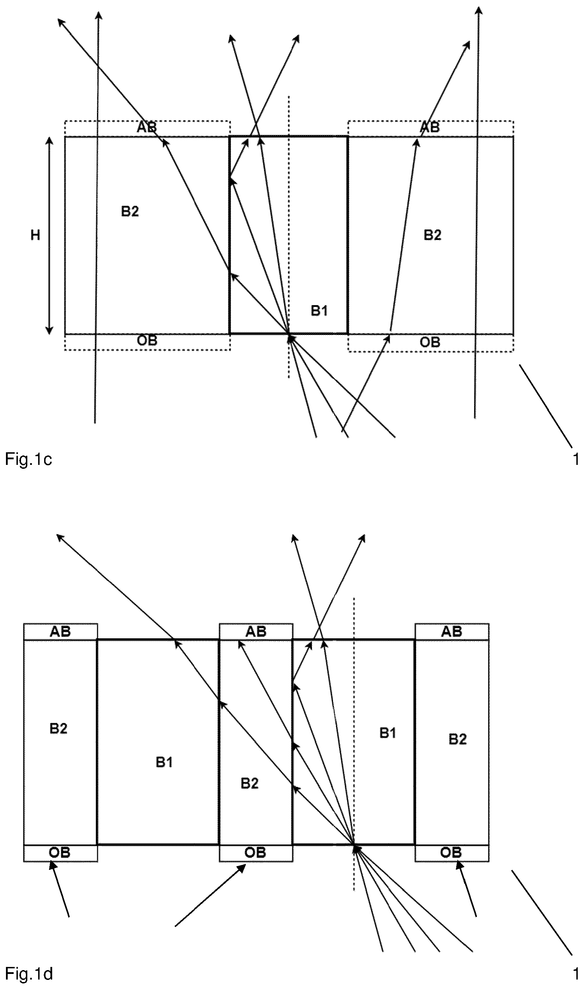

Fig. 1c die Prinzipskizze (Schnittdarstellung) eines ersten optischen Elements in einer ersten Ausgestaltung in einem dritten Zustand, in dem keine Strahlen absorbiert, sondern lediglich versetzt und/ oder totalreflektiert werden,
Fig. 1d die Prinzipskizze (Schnittdarstellung) eines ersten optischen Elements in einer zweiten Ausgestaltung in einem ersten Zustand, in dem nur Strahlen von Fällen a) und c) aus dem optischen Element ausgekoppelt werden,

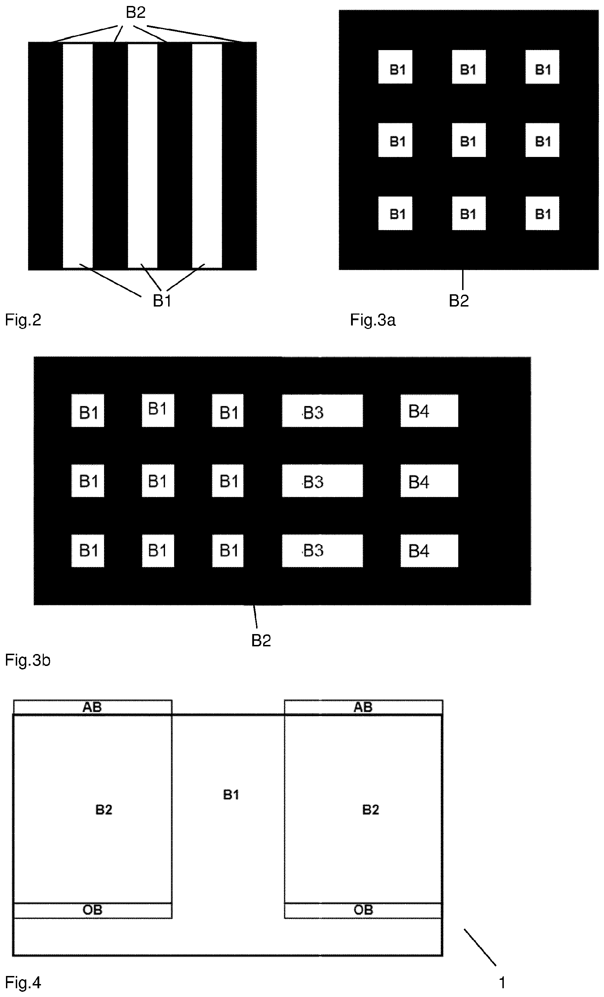

Fig. 2 die Prinzipskizze von ersten und zweiten Bereichen eines optischen Elements bei Betrachtung in Parallelprojektion senkrecht auf das optische Element, wobei diese streifenförmig abwechselnd über die Fläche des optischen Elements verteilt angeordnet sind,
Fig. 3a die Prinzipskizze der ersten und zweiten Bereiche eines optischen Elements bei Betrachtung in Parallelprojektion senkrecht auf das optische Element, wobei die ersten Bereiche rechteckförmig über die Fläche des optischen Elements verteilt angeordnet und vom zweiten Bereich vollständig umgeben sind,
Fig. 3b die Prinzipskizze von ersten bis vierten Bereichen eines optischen Elements bei Betrachtung in Parallelprojektion senkrecht auf das optische Element, wobei die ersten, dritten und vierten Bereiche rechteckförmig über die Fläche des optischen Elements verteilt angeordnet und vom zweiten Bereich vollständig umgeben sind,
Fig. 4 die Prinzipskizze (Schnittdarstellung) eines ersten optischen Elements in einer dritten Ausgestaltung,

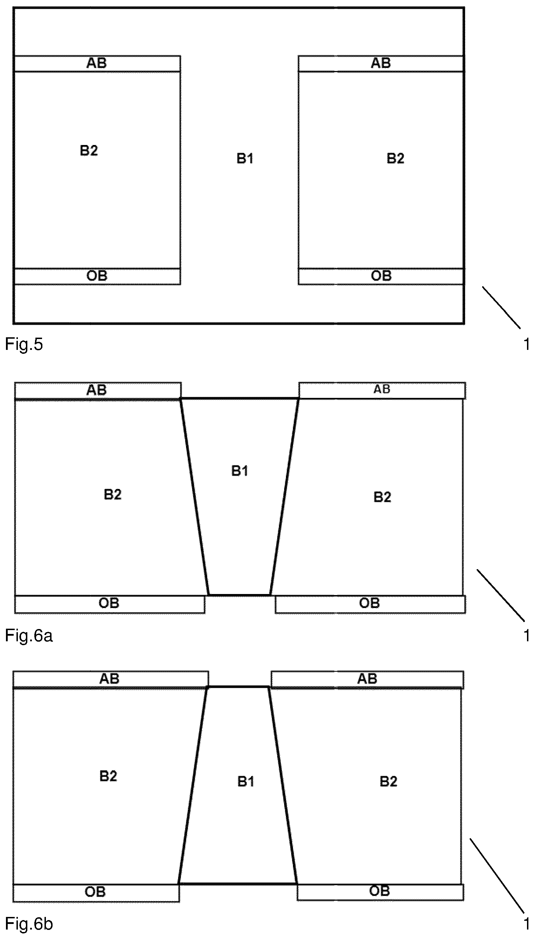

Fig. 5 die Prinzipskizze (Schnittdarstellung) eines ersten optischen Elements in einer vierten Ausgestaltung,
Fig. 6a die Prinzipskizze (Schnittdarstellung) eines ersten optischen Elements in einer fünften Ausgestaltung,
Fig. 6b die Prinzipskizze (Schnittdarstellung) eines ersten optischen Elements in einer sechsten Ausgestaltung,

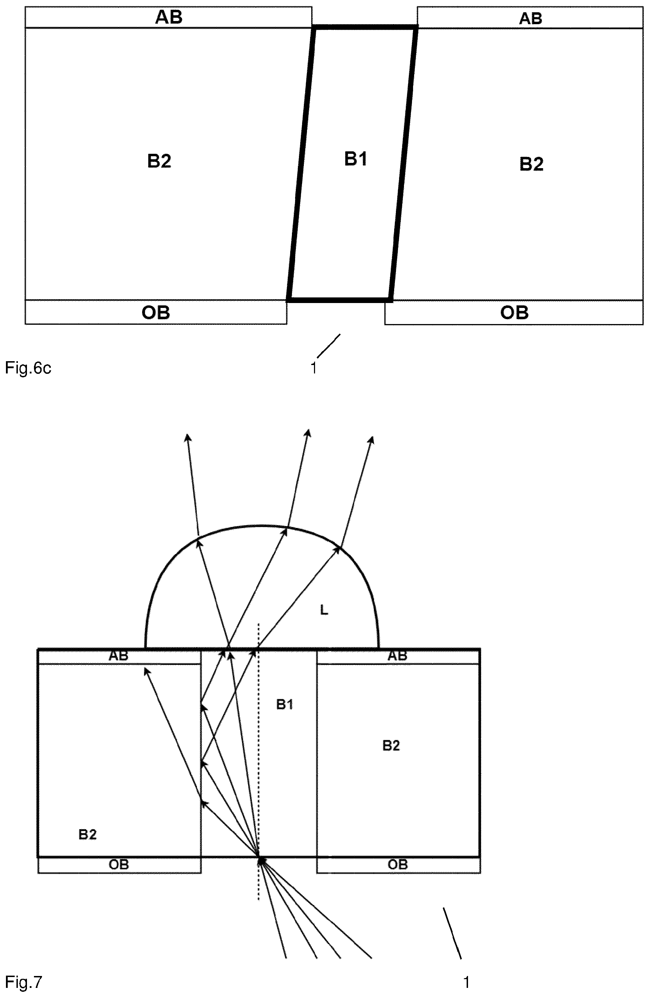

Fig. 6c die Prinzipskizze (Schnittdarstellung) eines ersten optischen Elements in einer siebten Ausgestaltung,
Fig. 7 die Prinzipskizze (Schnittdarstellung) eines ersten optischen Elements in einer achten Ausgestaltung,

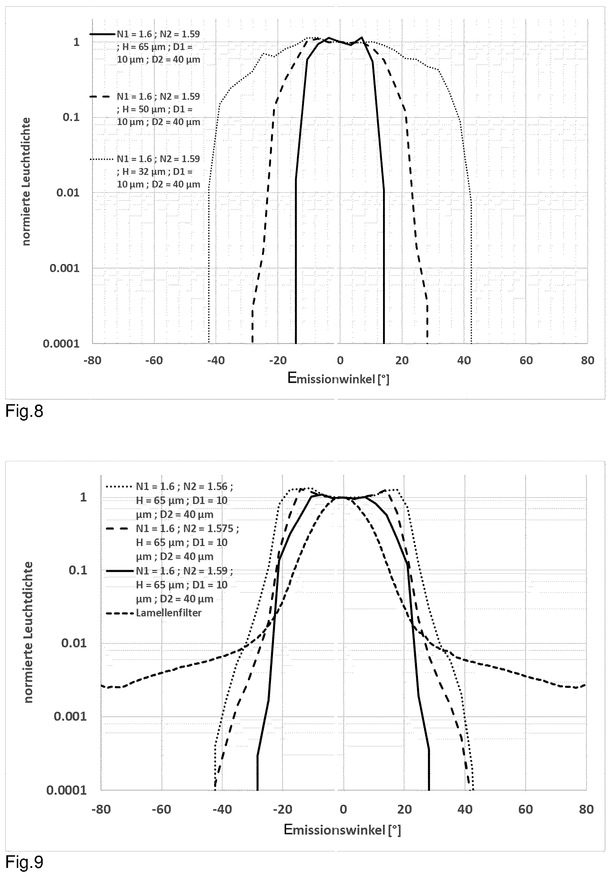

Fig. 8 die Simulation der normierten Leuchtdichte für drei Parametersätze für aus einem ersten optischen Element der ersten Ausgestaltung austretendes Licht, aufgetragen über dem Emissionswinkel,
Fig. 9 die Simulation der normierten Leuchtdichte für drei weitere Parametersätze für aus einem ersten optischen Element der ersten Ausgestaltung austretendes Licht, aufgetragen über dem Emissionswinkel, im Vergleich zu einem Lamellenfilter,

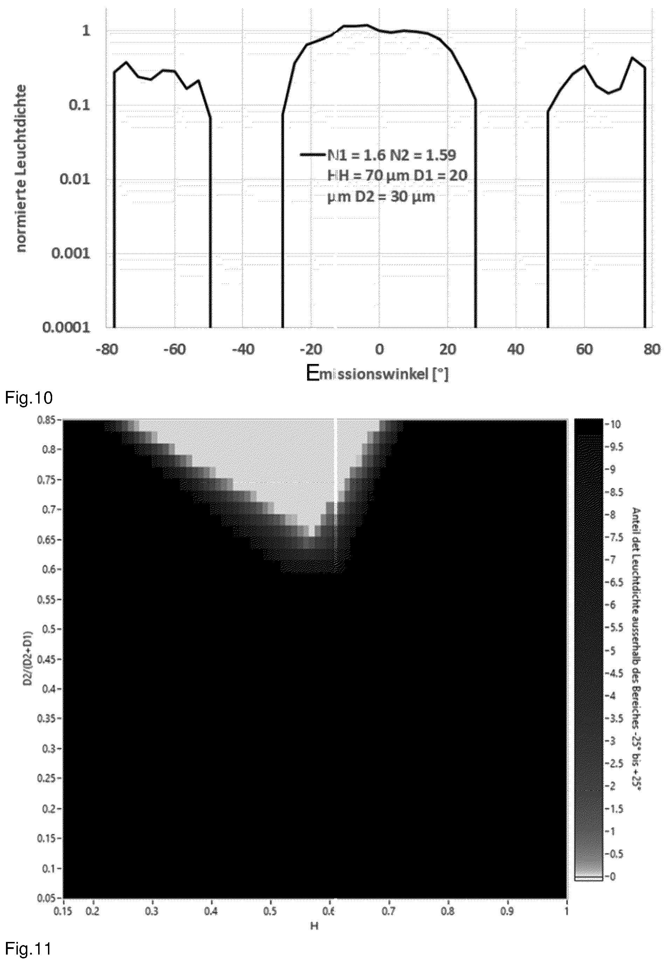

Fig. 10 die Simulation der normierten Leuchtdichte für drei Parametersätze für aus einem ersten optischen Element der zweiten Ausgestaltung austretendes Licht, aufgetragen über dem Emissionswinkel,
Fig. 11 den simulierten Anteil der Leuchtdichte außerhalb des Bereiches von -25° bis +25° für aus einem ersten optischen Element der ersten Ausgestaltung austretendes Licht,

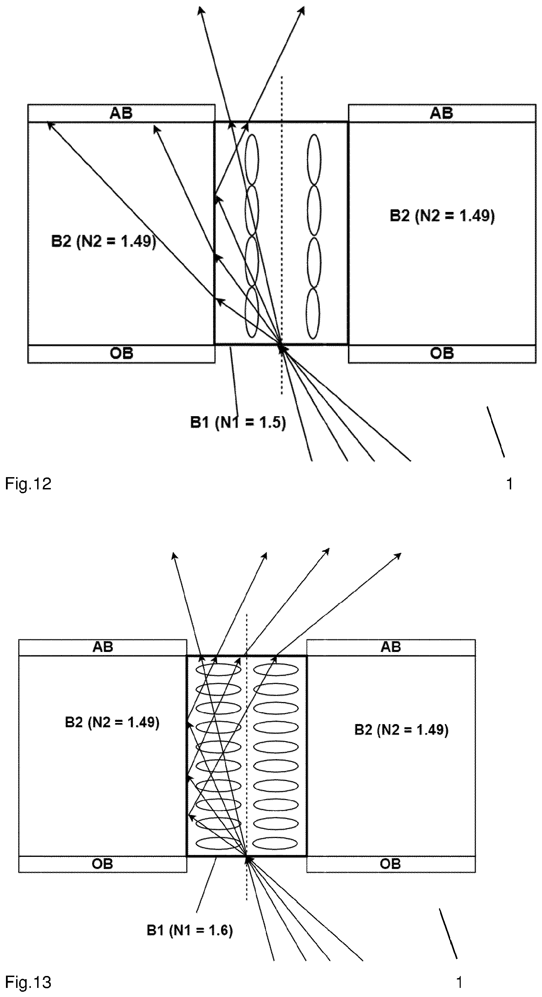

Fig. 12 die Prinzipskizze (Schnittdarstellung) eines ersten optischen Elements in einer neunten Ausgestaltung in einem ersten Zustand, in dem nur Strahlen eines Falles a) in einem engen Winkelbereich aus dem optischen Element ausgekoppelt werden,
Fig. 13 die Prinzipskizze (Schnittdarstellung) eines ersten optischen Elements in einer neunten Ausgestaltung in einem zweiten Zustand, in dem nur Strahlen des Falles a), jedoch in einem gegenüber den Verhältnissen der Fig. 12 aufgeweiteten Winkelbereich, aus dem optischen Element ausgekoppelt werden,

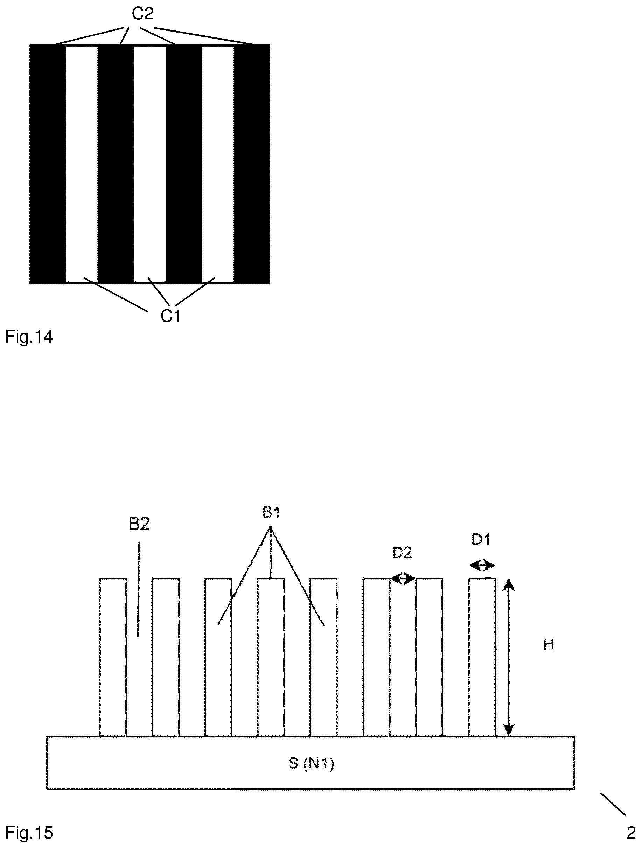

Fig. 14 die Prinzipskizze von Bereichen C1 und C2 eines Verfahrens, wobei diese Bereiche streifenförmig abwechselnd verteilt angeordnet sind,
Fig. 15 die Prinzipskizze (Schnittdarstellung) eines zweiten optischen Elements in einer ersten Ausgestaltung,

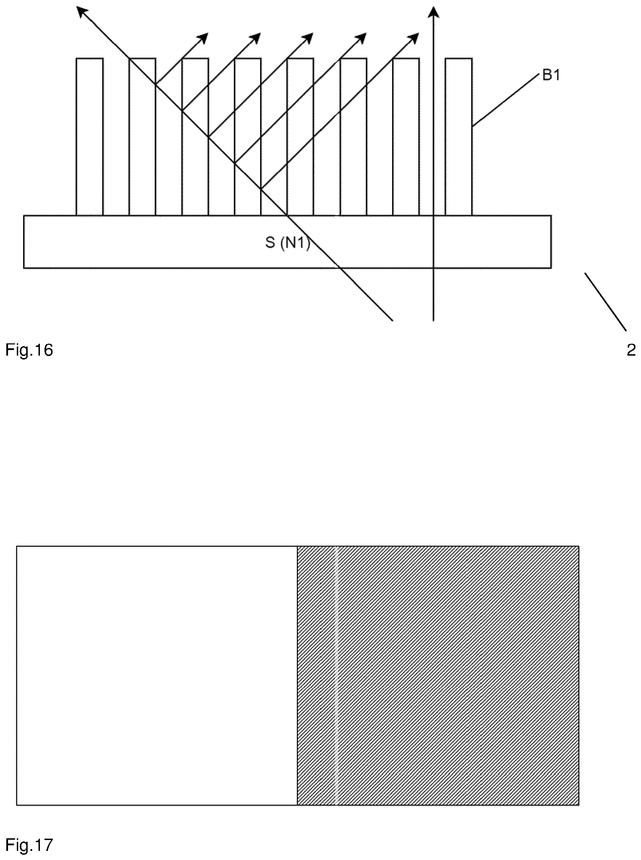

Fig. 16 die Prinzipskizze (Schnittdarstellung) eines zweiten optischen Elements in einer ersten Ausgestaltung, wobei beispielhafte Strahlen eingezeichnet sind,
Fig. 17 eine Prinzipskizze zur Illustration eines ersten optischen Elements in einer zehnten Ausgestaltung,

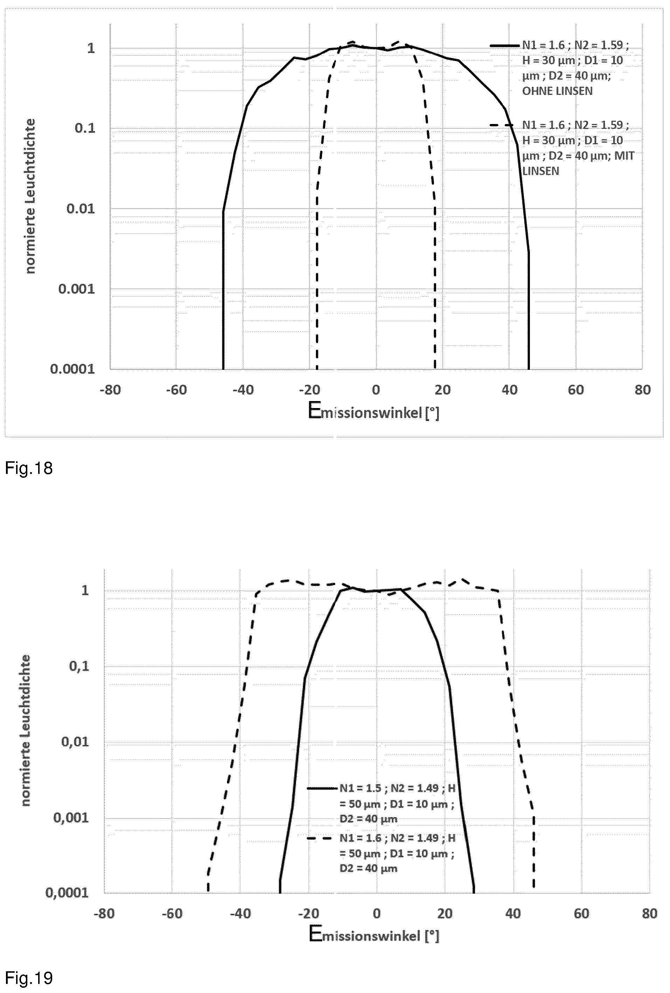

Fig. 18 der Vergleich der Simulationen der normierten Leuchtdichte für aus einem ersten optischen Element der ersten und der achten Ausgestaltung austretendes Licht, aufgetragen über dem Emissionswinkel,
Fig. 19 der Vergleich der Simulationen der normierten Leuchtdichte für aus einem ersten optischen Element der neunten Ausgestaltung austretendes Licht in zwei Zuständen, aufgetragen über dem Emissionswinkel,

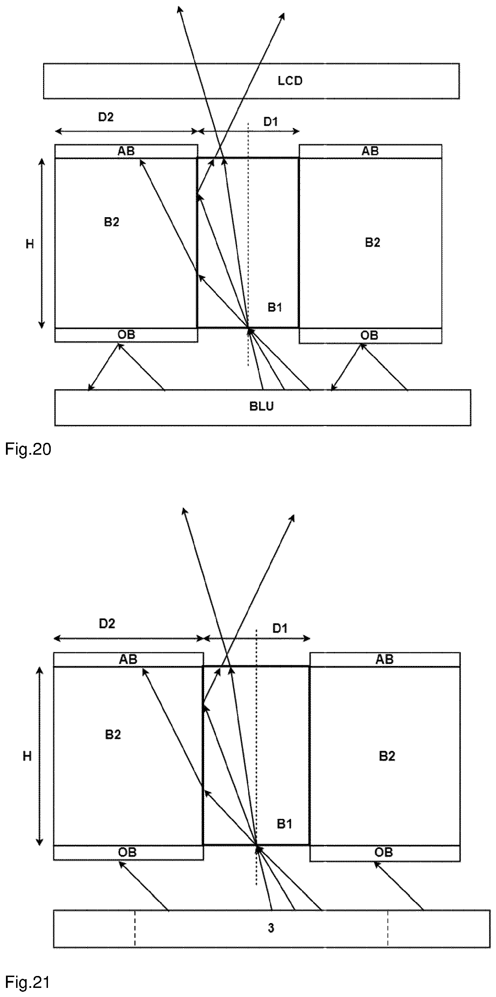

Fig. 20 die Prinzipskizze (Schnittdarstellung) eines ersten optischen Elements in einer ersten Ausgestaltung in einem ersten Zustand, bei Verwendung mit einer transmissiven Bildwiedergabeeinheit und einer Hintergrundbeleuchtung,
Fig. 21 die Prinzipskizze (Schnittdarstellung) eines ersten optischen Elements in einer ersten Ausgestaltung in einem ersten Zustand, bei Verwendung mit einer selbstleuchtenden Bildwiedergabeeinheit,

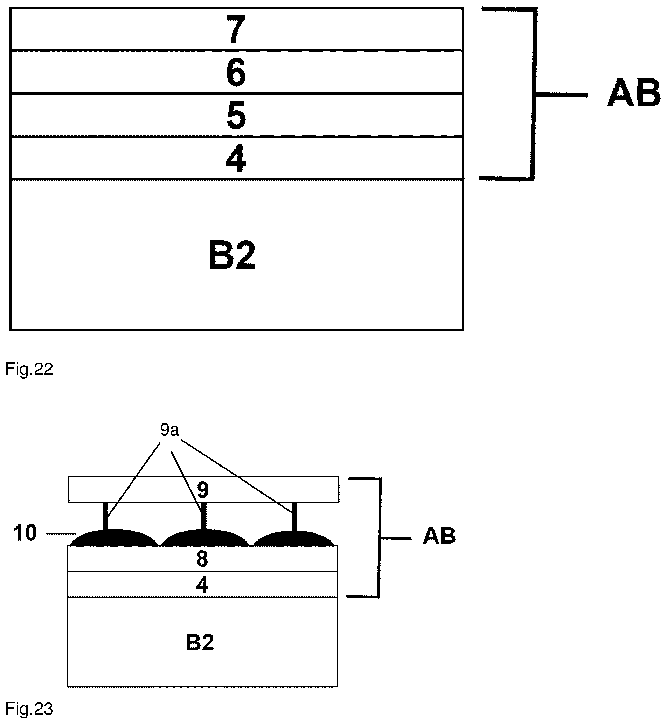

Fig. 22 die Weiterbildung eines ersten optischen Elements der ersten Ausgestaltung zu einer schaltbaren, elften Ausgestaltung (Ausschnittdarstellung),
Fig. 23 die Weiterbildung eines ersten optischen Elements der ersten Ausgestaltung zu einer schaltbaren, zwölften Ausgestaltung, hier im ersten Zustand (Ausschnittdarstellung),

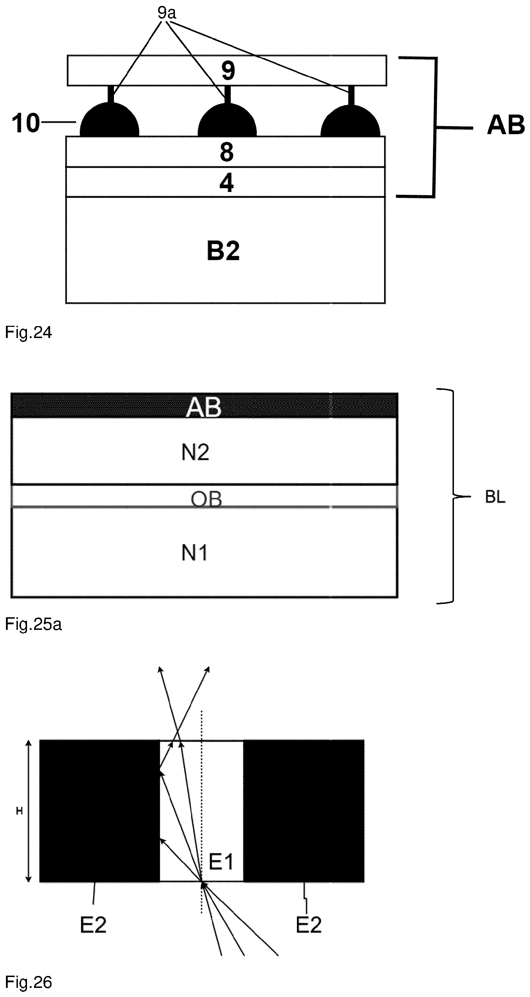

Fig. 24 die Weiterbildung eines ersten optischen Elements der ersten Ausgestaltung zu einer schaltbaren, zwölften Ausgestaltung, hier im zweiten Zustand (Ausschnittdarstellung),
Fig. 25a-25f Prinzipskizzen zur Erläuterung eines Verfahrens zur Herstellung für erste optische Elemente,
Fig. 26 die Prinzipskizze eines dritten optischen Elements,

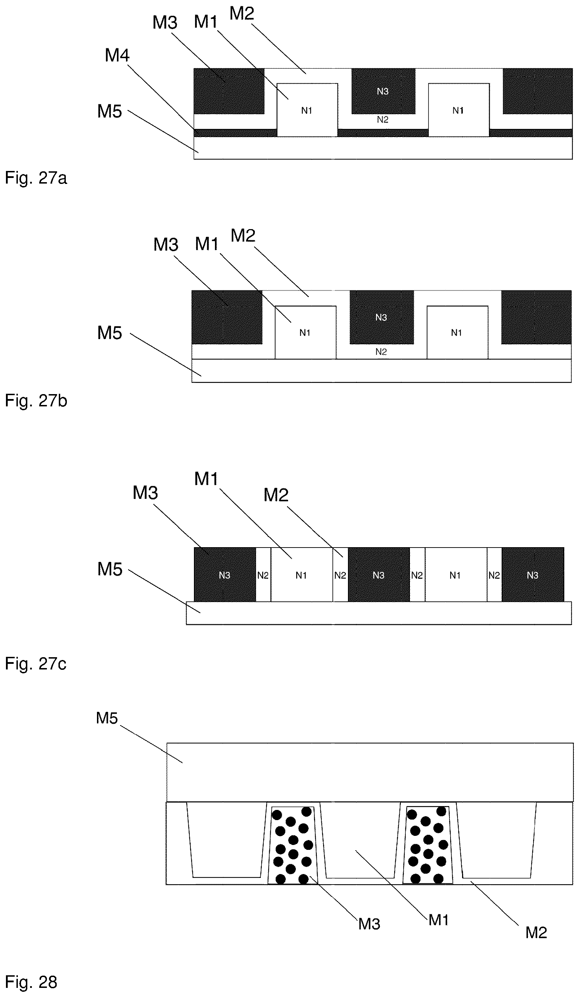

Fig. 27a-27c verschiedene Ausgestaltungen des dritten optischen Elements in einer Weiterentwicklung,
Fig. 28 eine weitere Ausgestaltung des dritten optischen Elements,

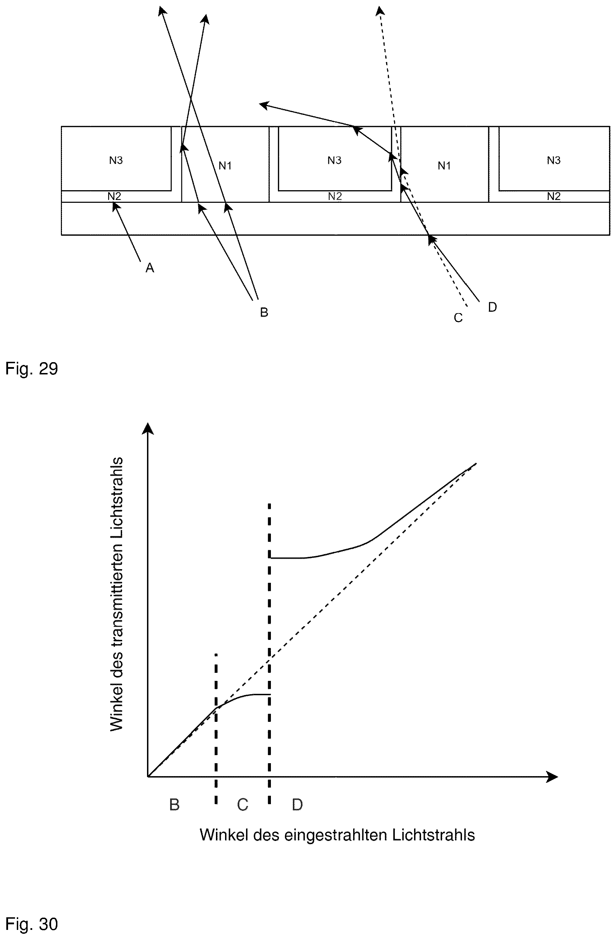

Fig. 29 den Strahlverlauf für verschiedene Einfallsbedingungen, sowie
Fig. 30 Winkelbereiche des transmittierten Lichts im Vergleich zum einfallenden Licht.

### Ausführliche Beschreibung der Zeichnungen

Die Zeichnungen sind nicht maßstabsgetreu und geben lediglich Prinzipdarstellungen wieder. Außerdem sind der besseren Übersichtlichkeit geschuldet in der Regel jeweils nur wenige Lichtstrahlen dargestellt, obwohl in der Realität von diesen eine Vielzahl vorhanden ist.

Ein beispielhaftes erstes optisches Element 1, das flächig ausgedehnt ist, umfasst mindestens aus einem ersten transparenten Material mit einer ersten Brechzahl N1 bestehende erste Bereiche B1 und aus einem zweiten transparenten Material mit einer zweiten Brechzahl N2 bestehende zweite Bereiche B2, die sich über die Fläche des ersten optischen Elements 1 in einer ein- oder zweidimensionalen periodischen Abfolge abwechseln, wobei die erste Brechzahl N1 im gesamten für ein menschliches Auge sichtbaren Wellenlängenbereich größer ist als die zweite Brechzahl N2. Das erste optische Element 1 umfasst außerdem jeweils eine mindestens zeitweise opake erste Schicht OB an der Unterseite jedes der zweiten Bereiche B2 und jeweils eine mindestens zeitweise opake zweite Schicht AB an der Oberseite jedes der zweiten Bereiche B2. "Mindestens zeitweise" bedeutet dabei, dass die Schicht entweder permanent opak ist oder zwischen einem opaken und einem transparenten Zustand umschaltbar ist. Sofern die Schicht permanent opak ist, muss sie nicht schaltbar sein. Mit der Oberseite ist in der Regel die Lichtaustrittsseite des optischen Elements 1 und hier spezifisch die Lichtaustrittsfläche der ersten bzw. zweiten Bereiche gemeint. Analog korrespondiert die Unterseite zur Lichteintrittsseite des optischen Elements 1 und hier spezifisch zur Lichteintrittsfläche des ersten bzw. zweiten Bereichs. Ein Betrachter oder Nutzer des optischen Elements blickt auf die Oberseite dieses Elements, aus welcher das Licht austritt.

An der Lichteintrittsseite auf das optische Element 1 auftreffendes Licht fällt aufgrund der ersten Schichten OB, wenn diese in einem opaken Zustand sind, ausschließlich durch die Lichteintrittsflächen der ersten Bereiche B1 in das optische Element 1 ein, und wird dort je nach Einfallswinkel, Polarisation und dem Verhältnis der ersten Brechzahl N1 zu der zweiten Brechzahl N2 entweder a) innerhalb eines ersten Bereiches B1 totalreflektiert - oder propagiert ungehindert - und wird hernach an einer Lichtaustrittsfläche des entsprechenden ersten Bereiches B1 wieder ausgekoppelt, oder b) dringt von dem ersten Bereich B1 in einen angrenzenden zweiten Bereich B2 ein, propagiert in diesem und wird schließlich an dessen Lichtaustrittsseite absorbiert, wenn die zweite Schicht AB im opaken Zustand ist, oder wird ausgekoppelt, wenn die zweite Schicht AB im transparenten Zustand ist, oder c) dringt, falls das Licht von dem ersten Bereich (B1) in den angrenzenden zweiten Bereich (B2) eingedrungen ist, wiederum in einen weiteren benachbarten ersten Bereich (B1) ein und wird je nach dann gegebener Ausbreitungsrichtung und Polarisation an der Lichtaustrittsfläche ausgekoppelt oder propagiert weiter im optischen Element (1) propagiert, bis es entweder ausgekoppelt oder absorbiert wird. Im Endeffekt ist das an der Lichtaustrittsseite aus dem optischen Element (1) austretende Licht gegenüber dem an der Lichteintrittsseite auf das optische Element (1) auftreffende Licht in seinen Ausbreitungsrichtungen eingeschränkt. Grundsätzlich sollen unter die Fälle c) all diejenigen Lichtstrahlen fallen, die nicht unter die Fälle a) oder b) fallen. In praxi liegt eine Vielzahl an ersten und zweiten Bereichen B1 und B2 auf dem ersten optischen Element 1 vor.

Dazu zeigt die Fig. 1a die Prinzipskizze eines solchen ersten optischen Elements 1 in einer ersten Ausgestaltung in einem ersten Zustand (d.h. die ersten und zweiten Schichten OB und AB sind opak), in dem nur Strahlen des Falles a) aus dem optischen Element 1 ausgekoppelt werden. Diese weisen gegenüber den von unten auf das optische Element 1 einfallenden Strahlen eingeschränkte Ausbreitungsrichtungen auf. Strahlen des vorbeschriebenen Falles b) werden an den zweiten Schichten AB absorbiert. Von unten auf die ersten Schichten OB einfallendes Licht wird ebenso absorbiert. Für die Dimensionierung bezeichnet D1 die Breite der ersten Bereiche B1, D2 die Breite der zweiten Bereiche B2 sowie H die gleiche Höhe jeweils beider Bereiche B1 und B2. Für besondere Anwendungsfälle könnten die ersten und zweiten Bereiche B1 und B2 jeweils auch - in gewissen Grenzen - unterschiedliche Höhen aufweisen.

Ferner zeigt Fig. 1b die Prinzipskizze eines ersten optischen Elements 1 in einer ersten Ausgestaltung in einem zweiten Zustand, in dem nur Strahlen der Fälle a) und b) aus dem optischen Element 1 ausgekoppelt werden. Hierzu befindet sich die obere zweite Schicht AB in einem transparenten Zustand (gestrichelt dargestellt). Das Winkelspektrum des oben aus dem optischen Element 1 austretenden Lichtes ist somit deutlich breiter als das gemäß den Verhältnissen nach Fig. 1a, wo nur Lichtstrahlen des Falles a) austreten.

Weiterhin gibt die Fig. 1c die Prinzipskizze eines ersten optischen Elements 1 in einer ersten Ausgestaltung in einem dritten Zustand wieder, in dem keine Strahlen absorbiert, sondern lediglich versetzt und/oder totalreflektiert werden. Hierzu werden beide Schichten AB und OB in einen transparenten Zustand versetzt (gestrichelt dargestellt).

Schließlich zeigt Fig. 1d die Prinzipskizze eines ersten optischen Elements 1 in einer zweiten Ausgestaltung in einem ersten Zustand (d.h. die beiden Schichten AB und OB sind opak), in dem nur Strahlen der Fälle a) und c) aus dem optischen Element 1 ausgekoppelt werden. Dieser dritte Fall c) für die Strahlen, die nach Überwinden der Brechzahlgrenze von B1 zu B2 wiederum die nächste Brechzahlgrenze B2 zum nächsten benachbarten Bereich B1 überwinden und je nach dann gegebener Ausbreitungsrichtung und Polarisation ausgekoppelt werden oder weiter im optischen Element 1 propagieren, bis sie entweder ausgekoppelt oder absorbiert werden, ist für spezielle Anwendungsfälle von Interesse, etwa wenn Lichtausbreitungsrichtungen in mittleren Winkelbereichen von ca. 30° bis 50° absorbiert werden sollen, größere und kleinere Winkel jedoch mit Licht beaufschlagt werden sollen. Die unter c) genannten Fälle können auf Basis optischer Simulation des optischen Elements durch geeignete Dimensionierung der ersten und zweiten Brechzahlen N1 und N2 sowie geeignete Wahl der Breiten der ersten und zweiten Bereiche B1 und B2 sowie deren Höhe ein- oder ausgeschlossen werden.

Für die Erzielung der bevorzugten Einschränkung der Ausbreitungsrichtungen des einfallenden Lichts (d.h. es sind nur noch die Fälle a) der Strahlen vorhanden, wie in Fig. 1a dargestellt) ist es wichtig, dass die beiden mindestens zeitweise opaken ersten und zweiten Schichten OB und AB tatsächlich opak sind. Sobald eine der Schichten, beispielsweise die zweite Schicht AB, nicht opak ist, können schräge Lichtstrahlen, die oberhalb des eigentlichen Grenzwinkels der Totalreflexion an der Grenzfläche B1-B2 in zweite Bereiche B2 eindringen, an deren oberen Kanten durch die nicht-opake zweite Schicht AB ungewollt austreten.

Weiterhin zeigt die Fig. 2 die Prinzipskizze der ersten und zweiten Bereiche B1 und B2 eines ersten optischen Elements 1 bei Betrachtung in Parallelprojektion senkrecht auf das optische Element 1 (also eine Draufsicht), wobei diese streifenförmig abwechselnd über die Fläche des optischen Elements 1 verteilt angeordnet sind. Damit würde die Einschränkung der Lichtausbreitungsrichtungen senkrecht zu den streifenförmigen ersten und zweiten Bereichen B1 und B2 wirksam sein, nicht aber parallel zu ihnen.

Alternativ dazu gibt Fig. 3a die Prinzipskizze der ersten und zweiten Bereiche B1 und B2 eines ersten optischen Elements 1 bei Betrachtung in Parallelprojektion senkrecht auf das optische Element 1 wieder (also ebenso in Draufsicht), wobei hier die ersten Bereiche B1 rechteckförmig über die Fläche des optischen Elements 1 verteilt angeordnet und von einem einzigen zweiten Bereich B2 - im Bild schwarz - vollständig umgeben sind, d.h. die zweiten Bereiche B2 oder der zweite Bereich B2 sind/ist dazu jeweils komplementär geformt. Damit würde die Einschränkung der Lichtausbreitungsrichtungen jeweils in mindestens zwei Ebenen, die senkrecht zu der Oberfläche des optischen Elements 1 stehen, wirksam sein. Praktisch ist die Wirkung eines solchen optischen Elements 1 in der Regel derart, dass die Lichtausbreitungsrichtungen in jedem Winkel nahe der Mittelsenkrechten des optischen Elementes bzw. parallel dazu fokussiert sind. Mit "nahe" ist in diesem Falle gemeint, dass die Abweichungen von der Mittelsenkrechten bzw. der Parallelen hierzu - je nach Ausgestaltung - weniger als 25° oder 30° betragen.

Überdies zeigt Fig. 3b die Prinzipskizze von mehreren Bereichen B1 bis B4 eines optischen Elements 1 bei Betrachtung in Parallelprojektion senkrecht auf das optische Element, wobei die Bereiche B1, B3 und B4 rechteckförmig über die Fläche des optischen Elements verteilt angeordnet und vom Bereich B2 vollständig umgeben sind. Neben den ersten und zweiten Bereichen B1 und B2 weist dieses optische Element 1 also auch weitere Bereiche B3 und B4 auf. Dabei haben die Bereiche B1, B3 und B4 jeweils unterschiedliche Parameter hinsichtlich der Form und/oder der Brechzahl. Aufgrund dessen erfährt Licht, welches diese Bereiche B3 und B4 durchdringt und aus dem optischen Element 1 austritt, andere Beschränkungen der Ausbreitungsrichtungen als in den Bereichen B1. Somit sind über das optische Element 1 verteilt Bereiche mit unterschiedlicher Lichtausbreitungsrichtungseinschränkung, quasi mit unterschiedlicher Fokussierung, realisierbar. Alle Varianten gemäß Fig. 2, Fig. 3a und Fig. 3b sind mit den Verhältnissen gemäß der Fig. 1a bis 1d gut kombinierbar. Andere Formen der ersten und zweiten Bereiche B1 und B2 sind ebenso möglich. Wichtig für die Erhaltung der Funktionsweise der Erfindung ist dabei stets, dass die ersten und zweiten Bereiche B1 und B2 optisch unmittelbar aneinander angrenzen, so dass ein optischer Brechzahlsprung möglichst ohne Luftspalt gegeben ist.

Vorteilhafte Ausgestaltungen sind derart ausgestaltet, dass jede erste, mindestens zeitweise opake Schicht OB an der Unterseite, d.h. der Lichteintrittsfläche der zweiten Bereiche B2 durch eine permanente Absorberschicht und/oder durch mindestens eine nach unten spiegelnde Schicht ausgebildet ist. Wenn nur eine spiegelnde Schicht vorhanden ist, so hat diese selbstredend ebenfalls opake Eigenschaften. Die spiegelnden Eigenschaften tragen dazu bei, die Effizienz zu erhöhen, etwa wenn ein optisches Element 1 in einer Beleuchtungseinrichtung, etwa für ein LCD-Panel, eingebaut wird. Ferner ist es möglich, dass jede mindestens zeitweise opake, zweite Schicht AB an der Oberseite, d.h. der Lichtaustrittsfläche der zweiten Bereiche B2 durch eine permanente Absorberschicht ausgebildet ist. Weisen dann in bestimmten, statischen Ausgestaltungen beide Schichten permanente opake Eigenschaften auf und sind die ersten und zweiten Brechzahlen N1 und N2 unveränderbar, so wirkt das optische Element 1 permanent einschränkend auf die Ausbreitungsrichtungen des auf es einfallenden Lichtes.

Ist hingegen in anderen, schaltbaren Ausgestaltungen der Erfindung mindestens eine der beiden Schichten AB und/oder OB des ersten optischen Elements 1 zwischen einem opaken und einem transparenten Zustand umschaltbar, so ist die Eigenschaft der Einschränkung der Ausbreitungsrichtungen des auf das optische Element 1 einfallenden Lichtes auf diese Weise zu- und abschaltbar: Ausschließlich in dem Fall, dass beide Schichten AB und OB opak sind, werden die Lichtausbreitungsrichtungen eingeschränkt (Fall a) - siehe Fig. 1). Sobald eine der beiden Schichten AB oder OB nicht opak ist, liegt die Einschränkung der Lichtausbreitungsrichtungen nicht mehr vor (Fälle a) und b) und ggf. c), dargestellt u.a. in der Zeichnung Fig. 1b). Somit ist das optische Element 1 schaltbar. Sollten sogar beide Schichten AB und OB transparent geschaltet sein, wie in Fig. 1c gezeigt, so bewirkt das optische Element 1 lediglich - je nach Einfallsrichtung des Lichtes - Strahlversätze und Richtungsänderungen durch totale interne Reflexionen an den Grenzen zwischen den ersten Bereichen B1 und den zweiten Bereichen B2, blockt aber insgesamt kein Licht ab.

In bevorzugten schaltbaren Ausgestaltungen wird nur die obere, zweite Schicht AB opak-transparent umschaltbar gestaltet, während die untere, erste Schicht OB permanent opak (und ggf. auch reflektierend) ausgebildet ist. Dies ist ausreichend, um die gewünschten Effekte zu erzielen.

Die Umschaltbarkeit der ersten bzw. zweiten Schichten OB bzw. AB kann bevorzugt basieren auf einem oder gleichzeitig mehreren der folgenden Prinzipien: Elektrobenetzung, Elektrophorese, Elektrochromie und/oder Flüssigristallzellen. Im Falle der Elektrobenetzung würden für die betreffende erste Schicht OB und/oder zweite Schicht AB mindestens zwei Zustände der der Elektrobenetzung unterliegenden, opaken Flüssigkeitsmengen definiert. Dazu zeigt die Fig. 23 als Ausschnittdarstellung die Weiterbildung eines ersten optischen Elements 1 der ersten Ausgestaltung zu einer schaltbaren, zwölften Ausgestaltung, hier im ersten Zustand, korrespondierend zu Fig. 1a. Demgegenüber zeigt Fig. 24 als Ausschnittdarstellung die Weiterbildung eines ersten optischen Elements 1 der ersten Ausgestaltung zu einer schaltbaren, zwölften Ausgestaltung, hier im zweiten Zustand, korrespondierend zu Fig. 1b. In den Ausgestaltungen gemäß den beiden Zeichnungen, Fig. 23 und Fig.2 4, sind mindestens folgende Komponenten vorhanden: mindestens eine flächige Indiumzinnoxid(ITO)-Elektrode 4, eine flächige Isolatorschicht 8, eine flächige Elektrode 9, die über aus der Fläche ragende, dünne Elektroden 9a jeweils in die Flüssigkeitstropfen 10 hineinragt, eine zeichnerisch nicht dargestellte, regelbare Spannungsquelle, welche mit der flächigen ITO-Elektrode 4 und der flächigen Elektrode 9 kontaktiert ist, sowie opake Flüssigkeitstropfen 10, die zwischen der Isolatorschicht 8 und den Elektrode 9 angeordnet sind, und die ggf. in eine Gelmatrix oder transparente Flüssigkeit eingebettet sind, und die dem Effekt der Elektrobenetzung unterliegen.

In einem ersten Betriebszustand gemäß Fig. 23 würden die Flüssigkeitstropfen 10 der zweiten Schicht AB die entsprechende Oberfläche eines zweiten Bereiches B2 möglichst komplett überdecken, also opak sein (dann ist die Einschränkung der Ausbreitungsrichtungen gegeben) und in einem zweiten Betriebszustand gemäß Fig. 24 würden die Flüssigkeitstropfen 10 der zweiten Schicht AB die entsprechende Oberfläche eines zweiten Bereiches B2 nur auf kleinstmöglichster Fläche überdecken, also weitestgehend transparent sein (dann ist die Einschränkung der Ausbreitungsrichtungen nicht gegeben). Dazu würden an der Spannungsquelle jeweils für die vorgenannten Zustände benötigte Spannungen eingestellt.

Im Falle von Elektrophorese würden für eine erste Schicht OB und/oder zweite Schicht AB opake Partikel, die elektrophoretisch bewegt werden können, in einer Flüssigkeit oder Gelmatrix bereitgestellt. Aufgrund der Wirkung eines elektrischen Feldes, welches über transparente Elektroden angelegt werden kann, würden diese dann in einem ersten Betriebszustand als betreffende erste oder zweite Schicht OB bzw. AB die entsprechende Oberfläche eines zweiten Bereiches B2 möglichst komplett überdecken, so dass die betreffende Schicht OB bzw. AB opak wirkt (dann ist die Einschränkung der Ausbreitungsrichtungen gegeben). In einem zweiten Betriebszustand bei einer anderen elektrischen Feldverteilung würden die Partikel als erste Schicht OB bzw. zweite Schicht AB die entsprechende Oberfläche eines zweiten Bereiches B2 auf kleinstmöglicher Fläche überdecken oder in ein Reservoir überführt oder im Volumen verteilt werden, die Schicht also mithin transparent sein (dann ist die Einschränkung der Ausbreitungsrichtungen nicht gegeben).

In Abwandlung dessen ist es auch möglich, dass opake, elektrophoretisch bewegbare Partikel die beiden Schichten OB und/oder AB ersetzen. Solche Partikel würden dann auf den Oberflächen der zweiten Bereiche B2, also an den Stellen der beiden Schichten OB und/oder AB, entweder unmittelbar anliegen, um eine Totalreflexion zu stören und einen opaken Zustand zu erzeugen, oder - nach elektrophoretischer Bewegung - in maximal 100 µm Abstand angeordnet sein, um eine Totalreflexion an den besagten Stellen zu erlauben und somit Licht weiter im optischen Element propagieren zu lassen, bis es in ersten Bereichen B1 ausgekoppelt wird.

Ferner gibt Fig.22 die Weiterbildung eines ersten optischen Elements 1 als Ausschnittdarstellung der ersten Ausgestaltung zu einer schaltbaren, elften Ausgestaltung, wieder. Dabei sind, um die zweite Schicht AB zu bilden, mindestens vorhanden: transparente Elektroden 4 und 6, eine -'zeichnerisch nicht dargestellte - regelbare Spannungsquelle, die mit den transparenten Elektroden 4 und 6 kontaktiert ist, mindestens eine elektrochrome Schicht 5 sowie optional eine Schutzschicht 7, z.B. Glas oder ein Polymer. Im Falle von Elektrochromie würde die Schicht 5 mit einem elektrochromen Material, z.B. einem Metalloxid (wie TiO₂, NiO, Nb₂O, MoO₃, Ta₂O₅, WO₃, IrO₂ oder Zr₂O₅), sowie entsprechenden transparenten Elektroden 4, 6 wie z. B. ITO (Indium-dotiertes Zinnoxid), FTO (Fluor-dotiertes Zinnoxid) oder AZO (Aluminium-dotiertes Zinkoxid), in welche die elektrochromen Materialien 5 eingebettet sind, ausgebildet. In Abhängigkeit von der an den Elektroden 4, 6 angelegten Spannung werden dann mindestens zwei Zustände für die elektrochrome Schicht 5, und somit gleichsam für die zweiten Schichten AB, definiert. In einem ersten Betriebszustand ist die zweite Schicht AB opak (dann ist die Einschränkung der Ausbreitungsrichtungen gegeben) und in einem zweiten Betriebszustand ist die zweite Schicht AB transparent (dann ist die Einschränkung der Ausbreitungsrichtungen nicht gegeben). Für die ersten Schichten OB ist dies analog anwendbar.

Die ersten Schichten OB und/oder die zweiten Schichten AB können auch als Flüssigristallzellen, etwa TN-Zellen (Twisted-Nematic-Flüssigkristallzellen) mit entsprechenden Polarisatorpaaren, ausgebildet werden. Die Flüssigkristallzellen können dann entsprechend über das Anlegen entsprechender elektrischer Felder bzw. Spannungen an Elektroden opak (dann ist die Einschränkung der Ausbreitungsrichtungen gegeben) oder transparent (dann ist die Einschränkung der Ausbreitungsrichtungen nicht gegeben) geschaltet werden.

Ferner kann es von Vorteil sein, wenn die ersten Schichten OB und/oder die zweiten Schichten AB in das Material, aus dem die ersten Bereiche B1 bestehen, eingebettet sind, wobei bevorzugt der Materialanteil der ersten Bereiche B1 des optischen Elements 1 nahtlos in den besagten, die betreffenden Schichten einbettenden Anteil übergeht. Dazu zeigt Fig. 4 die Prinzipskizze eines ersten optischen Elements in einer dritten und Fig. 5 in einer vierten Ausgestaltung. Dabei kann das Material der ersten Bereiches B1 mit der ersten Brechzahl N1 das gleiche Material wie das eines wie vorstehend beschrieben gebildeten Substrates sein, wie Fig. 4 zeigt. Alternativ ist es denkbar, dass die zweiten Bereiche B2 komplett von Material der ersten Bereiche B1 mit der ersten Brechzahl N1 eingehüllt sind, so wie es Fig. 5 wiedergibt.

Weitere Ausgestaltungen sehen vor, dass die ersten und zweiten Bereiche B1 und B2 bei Betrachtung in Schnittrichtung senkrecht zur oberen Oberfläche des optischen Elements 1 trapezförmig ausgebildet sind. Dazu geben die Fig. 6a bis 6c Prinzipskizzen eines ersten optischen Elements 1 in einer fünften, sechsten und siebten Ausgestaltung wieder. Durch derartige Ausbildungsformen der ersten und zweiten Bereiche B1 und B2 wird eine gezielte Beeinflussung der Ausbreitungsrichtungen des aus dem optischen Element 1 austretenden Lichtes vorgenommen: Je nach Ausgestaltung findet eine stärkere (Fig. 6a) oder schwächere (Fig. 6b) Fokussierung des Lichtes über die Fläche statt. Außerdem ist es möglich, etwa durch parallelogrammförmige Schnitte (Fig. 6c) der ersten und zweiten Bereiche B1 und B2, eine Peak-Verschiebung mittels der einhergehenden Verkippung der Grenzflächen zwischen den ersten Bereichen B1 und den zweiten Bereichen B2 zu erzielen.

Es ist überdies möglich, dass auf mindestens einem Teil der ersten Bereiche B1 eines optischen Elements 1, bevorzugt auf allen ersten Bereichen B1, an deren Oberseite, d.h. an der Lichtaustrittsfläche eine Linsenstruktur L aufgebracht ist, bevorzugt eine konvexe Linsenstruktur. Dies unterstützt die definierte Beeinflussung der Ausbreitungsrichtung des aus dem optischen Element 1 austretenden Lichtes. Dazu zeigt die Fig. 7 die Prinzipskizze eines ersten optischen Elements 1 in einer achten Ausgestaltung. Alternativ oder zusätzlich kann die Unterseite, d.h. die Lichteintrittsfläche der ersten Bereiche B1 eine - zeichnerisch nicht dargestellte - konkave oder konvexe Linsenstruktur aufweisen, um die Lichteintrittsrichtungen in die Bereiche B1 zu beeinflussen, und damit auch Einfluss darauf zu nehmen, ob ein Lichtstrahl schließlich unter die besagten Fälle a), b) oder c) fällt. Die Begriffe "Oberseite" und "Unterseite" sind in Bezug auf einen Betrachter zu sehen, für den das optische Element in einer Bildwiedergabeeinrichtung verbaut ist, und der nur die Lichtaustrittsseite des ersten optischen Elements 1 wahrnimmt, die ihm zugewandt ist und daher die Oberseite bildet.

Die Fig. 8 gibt die Simulation der normierten Leuchtdichte für drei Parametersätze für aus einem ersten optischen Element 1 der ersten Ausgestaltung austretendes Licht, aufgetragen über dem Emissionswinkel, wieder. Hierzu wurden die Verhältnisse gemäß der Zeichnungen Fig. 1a und Fig. 2 zu Grunde gelegt. Dabei wurde eine 100-prozentige Opazität der ersten Schichten OB und der zweiten Schichten AB angenommen. Sehr gut zu sehen ist, dass bei dem geringen Brechzahlunterschied von 0,01 zwischen N1 = 1,6 und N2 = 1,59 eine Top-Hat-Verteilung erzielt wird. Ferner ist zu erkennen, dass die Extinktion bei größeren Winkeln mit einem beliebig starken Faktor erzielt werden kann. In diesem Rechenbeispiel wurde die Höhe H der ersten und zweiten Bereiche B1 und B2, welche für beide gleich ist, über 32 µm, 50 µm und 65 µm variiert. Je größer die Höhe H, desto schmaler ist der Winkelbereich des ausgekoppelten Lichtes. Das gesamte ausgekoppelte Licht ist dem Fall a) zuzurechnen.

Der Wirkmechanismus ist mit anderen Worten der Folgende: Wenn Strahlen jeweils auf die Grenzfläche der ersten Bereiche B1 zu den zweiten Bereichen B2 (d.h. von der ersten Brechzahl N1 auf die zweite Brechzahl N2) treffen, dann werden diese entweder totalreflektiert oder in die zweiten Bereiche B2 (mit der Brechzahl N2) hineingebrochen, je nach Einfallswinkel. Wenn nun die letztgenannten Strahlen in die zweiten Bereiche B2 (mit der zweiten Brechzahl N2) hineingebrochen werden, so wird dennoch ein (kleiner) Teil auch wieder in die ersten Bereiche B1 zurückreflektiert (Fresnel-Reflexion). Je kleiner die Brechzahldifferenz N1-N2 ist, desto kleiner ist dieser rückreflektierte Anteil. Je höher die Höhe H (die fertigungstechnischen Limitationen unterliegt) ist, desto mehr wird dieser Rückreflexionseffekt maskiert. Im Idealfall wird eine fast perfekte Rechteckverteilung erzeugt.

In den Zeichnungen Fig. 8-10 ist die vorgenannte Rückreflexion bereits eingerechnet. Zu beachten ist die logarithmische Ordinate in diesen Zeichnungen. Die besagten Zeichnungen Fig. 8 bis Fig. 10 geben gleichsam beispielhafte Parameter für die technisch-optische Dimensionierung der wesentlichen Parameter Breite der ersten Bereiche D1, Breite der zweiten Bereiche D2, identische Höhe der Bereiche H, erste Brechzahl N1 sowie zweite Brechzahl N2.

Ergänzend zeigt die Fig. 9 eine auf den gleichen Voraussetzungen basierende Simulation der normierten Leuchtdichte für drei weitere Parametersätze für aus einem ersten optischen Element 1 der ersten Ausgestaltung austretendes Licht. Dieses Mal wurde bei fester Höhe H = 65 µm die zweite Brechzahl N2 und damit auch der Brechzahlunterschied zwischen der ersten Brechzahl N1 = 1,6 und der zweiten Brechzahl N2 variiert (N2 = 1,56 / 1,575 / 1,59). Zu erkennen ist hier, dass ein größerer Brechzahlunterschied mehr Licht in seitlichen Winkeln zulässt. Alles ausgekoppelte Licht ist dem Fall a) zuzurechnen. Gleichwohl ist auch hier eine Top-Hat-Verteilung gegeben. Der Vergleich mit einem herkömmlichen Lamellenfilter zur Lichtrichtungsbeschränkung ist ebenfalls in Fig. 9 eingezeichnet. Es ist klar zu erkennen, dass ein erfindungsgemäßes erstes optisches Element 1 gegenüber dem Stand der Technik, d.h. dem Lamellenfilter, wesentlich verbesserte Eigenschaften aufweist: Zum einen ist die Sichtschutzwirkung - je nach Ausgestaltung - ab Winkeln mit einem Betrag von 25° bis etwa 30° um Größenordnungen besser. Zum anderen weist die Erfindung die wünschenswerte Top-Hat-Verteilung auf. Demgegenüber schwankt bei einem Lamellenfilter, der in aller Regel keine Top-Hat-Verteilung aufweist, die wahrnehmbare Leuchtdichte je nach Ausgestaltung und Betrachtungsposition schon bei wenigen Grad Abweichung zur Mittelsenkrechten. So kann schon sie auf die Hälfte zusammenbrechen, wenn sie aus einem Winkel von mehr als 10° gegenüber der Mittelsenkrechten gemessen wird.

Demgegenüber zeigt Fig. 10 die Simulation der normierten Leuchtdichte für einen Parametersatz für aus einem ersten optischen Element 1 der zweiten Ausgestaltung austretendes Licht, aufgetragen über dem Emissionswinkel. Hier ist die disruptive Verteilung der mit Licht beaufschlagten Ausbreitungswinkel mit seitlichen Flanken gut zu erkennen. Während das dem Fall a) zuzurechnende Licht in den Winkeln zwischen ca. -28° und +28° liegt, sind zusätzliche Strahlen des Falles c) zwischen etwa -50° bis -77° und +50° bis +77° vorhanden.

Weiterhin gibt Fig.11 den simulierten Anteil der Leuchtdichte außerhalb des Bereiches von -25 Grad und +25 Grad (also Licht des Falls a)) für aus einem ersten optischen Element 1 der ersten Ausgestaltung austretendes Licht wieder. Die zu Grunde liegenden ersten und zweiten Brechzahlen für die Simulation sind N1 = 1,6 und N2 = 1,59. Zu erkennen ist das (helle) Parameterfenster oben, in welchem der Anteil des in dem vorgenannten Winkelbereich ausgekoppelten Lichts am größten ist. Der Fachmann kann hieraus Werte für die Dimensionierung der Breiten D1 und D2 sowie der Höhe H für die ersten und zweiten Bereiche B1 und B2 ableiten, um ein optisches Element 1 für den Fall a) zu optimieren.

Im Übrigen gibt Fig. 18 den Vergleich der Simulationen der normierten Leuchtdichte für aus einem ersten optischen Element 1 der ersten Ausgestaltung (korrespondierend zu Fig. 1a) und der achten Ausgestaltung (korrespondierend zu Fig. 7) austretendes Licht, aufgetragen über dem Emissionswinkel, wieder. Es ist zu erkennen, dass der Einsatz von Linsen L, ohne eine Top-Hat-Verteilung zu zerstören, den Winkeleinschränkungseffekt deutlich verbessern kann.

In einer besonderen Ausgestaltung des erfindungsgemäßen optischen Elements 1 ist die erste Brechzahl N1 des Materials in den ersten Bereichen B1 und/oder die zweite Brechzahl N2 des Materials in den zweiten Bereichen B2 zwischen mindestens zwei Zuständen umschaltbar, so dass die Brechzahlunterschiede an den Bereichs- und Brechzahlgrenzen B1 zu B2 jeweils modulierbar sind, wodurch die besagte Einschränkung der Ausbreitungsrichtungen variierbar ist. Dazu zeigt Fig. 12 die Prinzipskizze eines ersten optischen Elements 1 in einer neunten Ausgestaltung in einem ersten Zustand, in dem nur Strahlen des Falles a) in einem engen Winkelbereich aus dem optischen Element 1 ausgekoppelt werden. Hier betragen die zweite Brechzahl N2 = 1.49 und die erste Brechzahl N1 = 1.5 bei einer entsprechenden Orientierung der Flüssigkristalle.

Fig. 13 gibt die Prinzipskizze eines ersten optischen Elements 1 in der neunten Ausgestaltung in einem zweiten Zustand wieder, in dem ebenfalls nur Strahlen des Falles a), jedoch in einem gegenüber den Verhältnissen der Fig. 12 aufgeweiteten Winkelbereich aus dem optischen Element 1 ausgekoppelt werden. Hier betragen die zweite Brechzahl N2 = 1.49 und die erste Brechzahl N1 = 1.6 bei einer entsprechenden Orientierung der Flüssigkristalle. Dazu zeigt Fig. 19 den Vergleich der optischen Simulationen der normierten Leuchtdichte für aus einem ersten optischen Element 1 der neunten Ausgestaltung austretendes Licht in den zwei zu Fig. 12 und Fig. 13 korrespondierenden Zuständen, aufgetragen über dem Emissionswinkel. Es ist klar ersichtlich, dass die Winkelbeschränkung vermittels der vorbeschriebenen, umschaltbaren neunten Ausgestaltung eines optischen Elements 1 variierbar ist.

Für die vorgenannte neunte Ausgestaltung kann mindestens eines der Materialien der ersten Bereiche B1 und/oder zweiten Bereiche B2 aus Flüssigkristallen bestehen, die mit Elektroden in Kontakt stehen, um über eine Änderung der Spannung an den Elektroden eine Brechzahländerung für linear polarisiertes Licht in den Flüssigkristallen herbeizuführen. Die Elektroden können, wenn Sie beispielsweise an der Ober- und Unterseite, d.h. der Lichtaustritts- und der Lichteintrittsfläche der ersten Bereiche B1 angeordnet sind, transparent sein, wie z.B. in Form einer ITO-Schicht. Für diese Ausgestaltung ist zu bemerken, dass die ersten Schichten OB und die zweiten Schichten AB bevorzugt permanent opak sind, und dass ferner in der Regel ausschließlich die Lichtstrahlen des Falles a) das optische Element 1 nach oben verlassen können. Allerdings weisen diese Strahlen des Falles a) je nach Brechzahldifferenz an den Grenzflächen von den ersten Bereichen B1 zu den zweiten Bereichen B2 einen schmaleren oder breiteren Winkelbereich der Ausbreitungsrichtungen auf, wie in den Zeichnungen Fig. 12, Fig. 13 und Fig. 19 dargestellt. Dieser Winkelbereich ist umso breiter, je größer die Brechzahldifferenz ist und umso kleiner, je kleiner die Brechzahldifferenz ist. Grundsätzlich können in dieser neunten Ausgestaltung auch noch dritte, vierte und weitere Zustände einstellbar sein, die noch anderen Brechzahlwerten entsprechen, falls diese von einer Anwendung erfordert wird.

Für besondere Anwendungsfälle ist es möglich, dass auf dem optischen Element 1 mindestens ein erster Bereich B1 ausgebildet ist, der bei Betrachtung in Parallelprojektion senkrecht auf das optische Element 1 in seiner kürzesten Ausdehnung mindestens zwanzigmal so groß ist, wie die kürzeste Ausdehnung aller zweiten Bereiche B2 bei Betrachtung in Parallelprojektion senkrecht auf das optische Element 1, so dass innerhalb des besagten mindestens einen ersten Bereiches B1 außer an dessen Rändern und bis auf Parallelversätze im Wesentlichen keine Einschränkung der Ausbreitungsrichtungen des aus dem optischen Element 1 austretenden Lichtes gegenüber dem auf das optische Element 1 auftreffenden Lichtes vorliegt. Dazu zeigt Fig. 17 eine Prinzipskizze zur Illustration eines ersten optischen Elements 1 in einer solchen zehnten Ausgestaltung. Die linke, unschraffierte Hälfte würde beispielsweise einem einzigen kompletten ersten Bereich B1 entsprechen, während die rechte, schraffierte Hälfte alternierend erste Bereiche B1 und zweite Bereiche B2 aufweist, korrespondierend beispielsweise zu der ersten bis neunten Ausgestaltung des optischen Elements 1. Dies bedeutet nichts anderes, als das die Einschränkung der Ausbreitungsrichtungen von das optische Element 1 durchdringendem Licht nicht auf der gesamten Fläche des optischen Elements 1 wirkt, sondern vielmehr in diesem Beispiel nur auf der rechten Hälfte.

Die Erfindung erlangt besondere Bedeutung in der Verwendung eines vorstehend beschriebenen ersten optischen Elements 1 mit einer Bildwiedergabeeinheit (z.B. einem LCD-Panel, einem OLED oder microLED oder jeder anderen Displaytechnologie) oder mit einer Beleuchtungseinrichtung für eine transmissive Bildwiedergabeeinheit. Dazu gibt Fig. 20 die Prinzipskizze (Schnittdarstellung, Ausschnitt) eines ersten optischen Elements 1 in einer ersten Ausgestaltung in einem ersten Zustand wieder, und zwar bei Verwendung mit einer transmissiven Bildwiedergabeeinheit "LCD" und einer Hintergrundbeleuchtung "BLU". Somit ist das optische Element 1, insbesondere in schaltbaren Ausgestaltungen, direkt in eine Hintergrundbeleuchtung BLU für eine transmissive Bildwiedergabeeinheit wie etwa ein LCD-Modul integriert. Vorteilhaft sind hier die permanent opaken Schichten OB an der Unterseite reflektierend, so dass dort auftreffendes Licht in die Hintergrundbeleuchtung BLU zurückgeworfen und dort recycelt wird, wie in der Zeichnung angedeutet. Das Licht der Hintergrundbeleuchtung BLU kann somit ausschließlich in die ersten Bereiche B1 eindringen und erfährt dort im ersten Zustand des optischen Elements 1, wenn die zweiten Schichten AB opak sind, die erfindungsgemäße Beschränkung der Lichtrichtungen. Die Bildwiedergabeeinheit LCD wird dann nur von erfindungsgemäß gerichtetem Licht durchdrungen und ist nur aus einem entsprechend eingeschränkten Winkelbereich sichtbar, bis auf Streuverluste, etwa aufgrund des LCD-Panels selbst. Wird ein, zeichnerisch nicht dargestellter zweiter Zustand des optischen Elements 1 eingestellt, bei dem die zweiten Schichten AB transparent geschaltet sind, so würde ein breites Winkelspektrum an Licht die Bildwiedergabeeinheit LCD durchdringen und diese würde aus einem weiten Winkelbereich sichtbar sein.

Bei den vorgenannten Verwendungsansätzen wird ein schaltbarer Sichtschutz für die Bildwiedergabeeinheit LCD erreicht: Im ersten Betriebszustand, bei dem nur die besagten Fälle a) für die aus dem optischen Element 1 ausfallenden Strahlen verbleiben, ist ein Sichtschutz-Effekt, je nach Ausgestaltung mit einer Top-Hat-Verteilung, gegeben. Die Top-Hat-Verteilung ist für einen Betrachter angenehmer als eine typische Lichtverteilung auf Basis eines Lamellenfilters, weil mit einem Lamellenfilter die Bewegungsfreiheit stark eingeschränkt ist: Schon wenige Zentimeter Kopfbewegung zur Seite sorgen für starke, sichtbare Helligkeitsabfälle (siehe auch Fig. 9 zum Vergleich). Teilweise sind diese schon bei Kopfstillstand sichtbar, wenn der Bildschirm groß genug ist. Dem wird durch die Top-Hat-Verteilung suffizient entgegengewirkt. Im zweiten Betriebszustand, bei dem in der Regel die Fälle a) und b), und ggf. auch noch die Fälle c) für die aus dem optischen Element 1 austretenden Strahlen gelten, ist ein freier Sichtmodus gegeben, bei dem die Bildwiedergabeeinheit LCD aus allen Richtungen frei betrachtbar ist.

Weiterhin zeigt Fig. 21 die Prinzipskizze (Schnittdarstellung, Ausschnitt) eines ersten optischen Elements 1 in einer ersten Ausgestaltung in einem ersten Zustand, und zwar bei Verwendung mit einer selbstleuchtenden Bildwiedergabeeinheit 3. Dabei ist das optische Element 1 in Betrachtungsrichtung vor einer solchen Bildwiedergabeeinheit 3, beispielsweise einem OLED-Panel, angeordnet (ein LCD-Panel mit Hintergrundbeleuchtung wie auch jede andere Bildschirmtechnologie würden jedoch genauso anwendbar sein), um wahlweise oder permanent deren Lichtausbreitungsrichtungen zu beschränken. In diesem Fall kann auf der Bildwiedergabeeinheit 3 noch eine Optik vorhanden sein, die das von den jeweiligen Pixeln der Bildwiedergabeeinheit 3 abgestrahlte Licht im Wesentlichen auf den Flächen bündeln, die den ersten Bereichen B1 gegenüber liegen. Dies ist beispielsweise möglich mit Mikrolinsenrastern oder Lentikularen, die in etwa die Perioden der Pixelbreiten (oder ggf. -höhen) aufweisen. Die Periode der ersten Bereiche B1 (d.h. die Summe der Breiten D2+D1) sollte dann im besten Falle mit der Periode der Pixelbreiten (oder ggf. -höhen) übereinstimmen und zueinander ausgerichtet sein. Eine Periode der Pixelbreite der Bildwiedergabeeinheit 3 ist in Fig. 21 mit den beiden Strichlinien angedeutet. Ein Pixel liegt dann beispielswiese etwa mittig gegenüber einem ersten Bereich B1. Eine vorbeschriebene Optik mit Mikrolinsenrastern oder Lentikularen ist in Fig. 21 der Übersichtlichkeit halber nicht eingezeichnet, kann aber vorhanden sein.

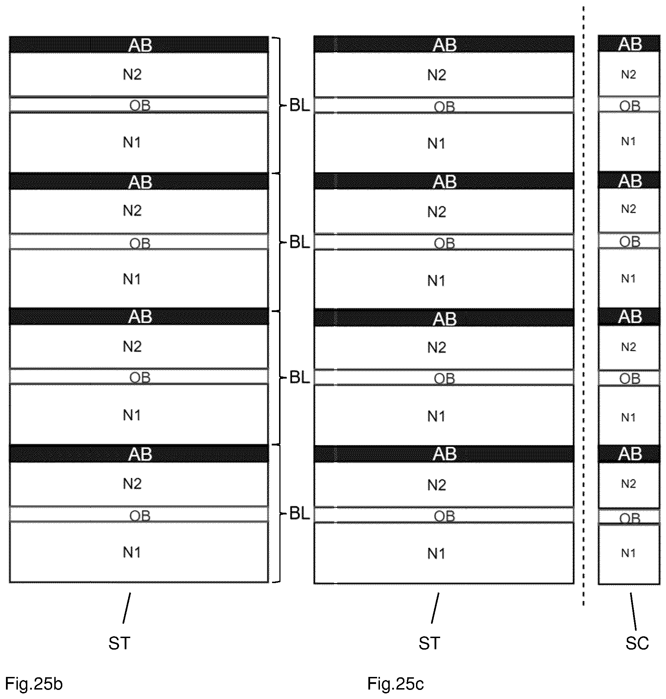

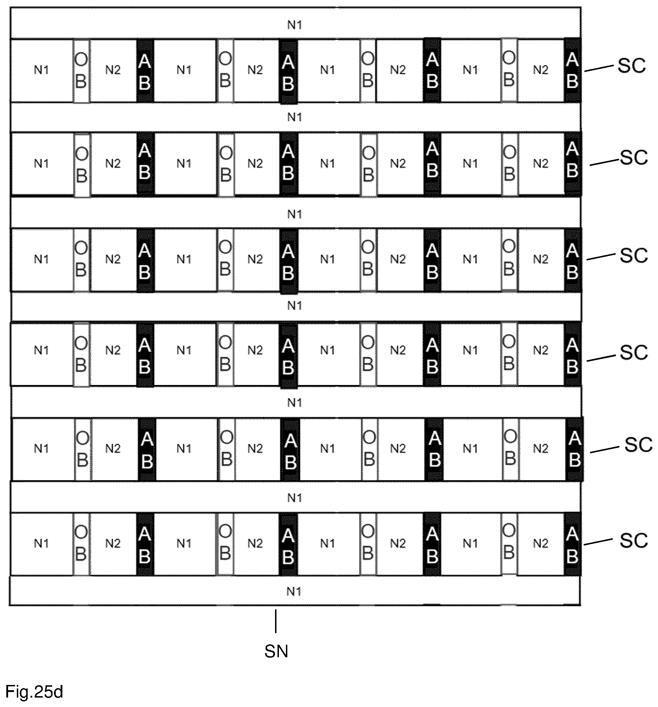

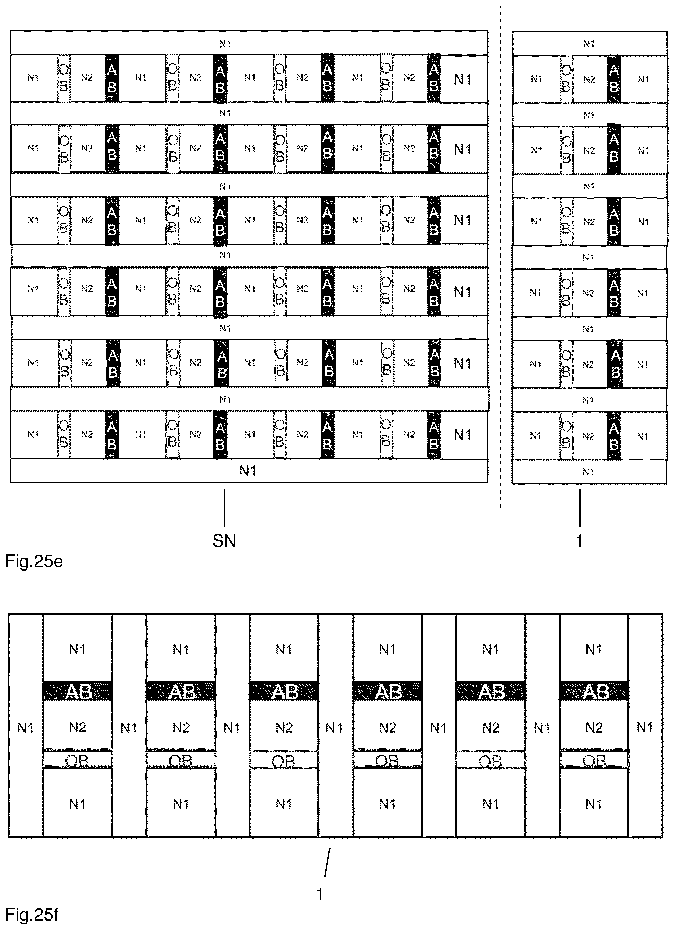

Weiterhin umfasst die Erfindung noch ein Verfahren zur Herstellung eines ersten optischen Elements 1, das anhand der Zeichnungen Fig. 25a bis Fig. 25f, die vereinfachte Prinzipskizzen zeigen, erläutert werden soll. Dieses umfasst die folgenden Schritte: Zunächst werden mehrere Basisblöcke BL erzeugt, die in dieser Reichenfolge folgende miteinander verbundene Schichten beinhalten: eine als Absorberschicht wirkende zweite Schicht AB, eine zweite transparente Schicht aus einem Material mit einer zweiten Brechzahl N2, eine opake und optional gleichzeitig reflektierende erste Schicht OB sowie eine erste transparente Schicht aus einem Material mit einer ersten Brechzahl N1, (siehe Fig.25a). Mehrere Basisblöcke BL werden dann übereinander gestapelt und beispielsweise durch Vulkanisieren oder Kleben verbunden, um einen ersten Stapelblock ST zu erhalten, (siehe Fig.25b). Dann werden Scheiben SC mit der Schichtdicke D2 aus dem Stapelblock ST abgeschnitten, bevorzugt senkrecht zur Flächenausdehnungsebene der einzelnen zweiten Schichten AB, (siehe Fig. 25c), wobei alternativ zum senkrechten Schnitt auch ein Schnittwinkel von ca. 60° bis 120° in Frage kommen kann. Die Scheiben SC werden dann mit jeweils dazwischenliegenden ersten transparenten Schichten mit der ersten Brechzahl N1 und der ersten Schichtdicke D1 gestapelt und beispielsweise durch Vulkanisieren oder Kleben verbunden, um einen zweiten Stapelblock SN zu erhalten, (siehe Fig.25d). Zum Schluss werden aus dem zweiten Stapelblock SN, bevorzugt senkrecht zur Flächenausdehnungsebene der einzelnen Scheiben SC, (siehe Fig.25e), optische Elemente 1 abgeschnitten. Im Ergebnis liegen (erste) optische Elemente 1 vor, wie in Fig.25f gezeigt. Selbstredend sind auch andere Herstellungsverfahren für ein optisches Element 1 möglich.

Fig. 15 zeigt ein zweites optisches Element 2, das aus einer ein- oder zweidimensionalen periodischen Abfolge von zwei transparenten komplementären Formen mit ersten und zweiten Bereichen B1 und B2 mit jeweils ersten und zweiten Brechzahlen N1 und N2 besteht, wobei die Formen optional auf einem flächigen Substrat S ausgebildet sind, und somit in zwei Richtungen jeweils eine Ebene bilden. Dabei kann die zweite Brechzahl B2 vorteilhaft gleich eins sein, d.h. das Material in den Formen der zweiten Bereiche B2 ist beispielsweise Luft. Dies ist in Fig. 15 als Prinzipskizze eines zweiten optischen Elements 2 in einer ersten Ausgestaltung dargestellt. Die Fig.16 zeigt dazu beispielhafte Strahlengänge. Somit wird Licht, welches unter einer (schmalwinkligen) Vorzugsrichtung auf ein solches zweites optisches Element 2 trifft, ungehindert transmittiert wird (siehe rechter, senkrecht - also in Vorzugsrichtung- einfallender Strahl), während Licht, welches einen Winkel von mehr als 15° zur besagten Vorzugsrichtung aufweist (siehe schräger Lichtstrahl links), durch das zweite optische Element 2 auf Grund von Totalreflexion und/oder Fresnel-Reflexionen abgelenkt wird. Auch hier werden die Ausbreitungsrichtungen des ausfallenden Lichtes beeinflusst. Die weiter vorn stehenden Ausgestaltungen können analog angewendet werden und sollen daher an dieser Stelle nicht nochmals wiederholt werden. Es gelten hier sinngemäß die weiter oben angegebenen Ausgestaltungsvarianten und Mittel-Wirkungszusammenhänge, die hier aus Redundanzgründen nicht wiederholt werden sollen.

Schließlich umfasst die Erfindung noch ein drittes optisches Element 10, das flächig ausgedehnt ist, eine Lichteintrittsseite und eine Lichtaustrittsseite aufweist, und dessen Prinzipskizze in Fig.26 (Ausschnitt/Querschnitt) gezeigt ist. Dieses umfasst mindestens aus einem transparenten Material mit einer ersten Brechzahl N1 bestehende erste Bereiche E1 und aus einem opaken Material mit einer zweiten Brechzahl N2 bestehende zweite Bereiche E2, die sich über die Fläche des optischen Elements 10 in einer ein- oder zweidimensionalen periodischen Abfolge abwechseln, wobei die erste Brechzahl N1 im gesamten für ein menschliches Auge sichtbaren Wellenlängenbereich größer ist als die zweite Brechzahl N2. An einer ersten Großfläche des optischen Elements 10 auf dieses auftreffende Licht fällt aufgrund des opaken Materials der zweiten Bereiche E2 ausschließlich durch Lichteintrittsflächen der ersten Bereiche E1 in das optische Element 10 ein. Je nach geometrischer Einfallrichtung, Polarisation und dem Verhältnis der ersten Brechzahl N1 zu der zweiten Brechzahl N2 a) propagiert das Licht innerhalb eines ersten Bereiches E1 ungehindert oder wird totalreflektiert. Jedenfalls wird es hernach an einer Lichtaustrittsfläche des entsprechenden ersten Bereiches E1 wieder ausgekoppelt. Alternativ b) dringt das Licht von dem ersten Bereich E1 in einen angrenzenden zweiten Bereich E2 ein und wird dort aufgrund des opaken Materials der zweiten Bereiche E2 absorbiert.

Dabei werden aufgrund der unterschiedlichen ersten Brechzahlen N1 und zweiten Brechzahlen N2 in zweite Bereiche E2 eindringende Strahlen stärker vom Lot weg gebrochen. Dadurch ist das an einer zweiten Großfläche des optischen Elements 10 aus diesem austretende Licht gegenüber dem an der ersten Großfläche auf das optische Element 10 auftreffende Licht in seinen Ausbreitungsrichtungen eingeschränkt. Das opake Material mit der zweiten Brechzahl weist einen transparenten Anteil, welchem die zweite Brechzahl zugeordnet ist, sowie einen aus absorbierenden Partikeln bestehenden opaken Anteil auf. Die Partikel sind vorzugsweise gleichmäßig im opaken Material verteilt und ihr Masseanteil am opaken Material beträgt in der Regel nicht mehr als 50%.

Diese dritte optische Element 10 verbessert den Stand der Technik insbesondere dahingehend, dass erstens auch mit Lamellenfiltern ähnlichen dritten optischen Elementen eine Top-Hat-Verteilung erreicht werden, da aufgrund der Totalreflexion mehr Nutzlicht in die gewünschten eingeschränkten Winkelbereiche transmittiert wird, als - wie im Stand der Technik üblich- ohne die Totalreflexion, und dass zweitens die Einschränkung der Winkelbereiche des das dritte optische Element 10 durchdringenden Lichtes deutlich stärker ist, weil nicht allein die opaken Lamellen für die Lichtrichtungseinschränkung sorgen, sondern auch der Brechzahlunterschied zwischen den Bereichen E1 und E2 dafür sorgt, dass in Bereiche E2 eindringende Strahlen stärker vom Lot weg gebrochen und somit einen längeren optischen Weg durch das absorbierende Material zurücklegen müssten, mithin also stärker - da auf einem längeren Weg - absorbiert werden, als ohne einen solchen Brechzahlunterschied.

Wie aus den Erläuterungen zu Fig.8 bis Fig.10 in analoger Weise zu entnehmen ist, reichen geringfügige Brechzahlunterschiede von 0,01 bereits aus, um hervorragende Winkelbeschränkungen zu erzielen. Solche geringfügigen Brechzahlunterschiede sind beispielsweise durch Dotieren eines Polymers bzw. von transparentem Silikon als Material für die Bereiche E1 oder E2 eines dritten optischen Elements 10 zu erzielen. Im einfachsten Fall würden dann alle Bereiche E1 und E2 eines dritten optischen Elements 10 aus dem gleichen Material bestehen. Zusätzlich wären die Bereiche E1 aber für eine Brechzahlerhöhung mit transparenten Partikeln und die Bereiche E2 für die Opazität, etwa mit opaken Nano- oder Mikropartikeln, dotiert.

Dieses dritte optische Element 10 kann vorteilhaft an einer der Großflächen, bevorzugt an der ersten Großfläche, eine Verspiegelung aufweisen, welche als eine winkelabhängige Verspiegelung der gesamten Großfläche oder als eine Vollverspiegelung an den Oberflächen der Bereiche E2 ausgestaltet ist.

Ein vorbeschriebenes drittes optisches Element 10 kann vorteilhaft in eine Beleuchtungseinrichtung für eine transmissive Bildwiedergabeeinheit, wie etwa ein LCD-Panel, integriert werden. Diese Beleuchtungseinrichtung kann dann permanent als gerichtete Hintergrundbeleuchtung wirken und beispielsweise in Ausgestaltungen gemäß der WO 2015/121398 oder der WO 2019/002496 der Anmelderin eingesetzt werden.

Fig. 27a-c und Fig. 28 zeigen verschiedene Weiterentwicklungen eines solchen dritten optischen Elements, welches hier jeweils mit einem Substrat M5 verbunden ist, dass jedoch nicht Teil des optischen Elements ist. Wie zuvor auch weist das dritte optische Element 10 in dieser Ausgestaltung auch Bereiche E1 aus einem ersten transparenten Material M1 mit einer ersten Brechzahl N1 und zweiten Bereichen E2 aus einem zweiten opaken Material M2 mit einer zweiten Brechzahl N2 auf. Das zweite opake Material M2 ist mit absorbierenden Materialien versetzt, so dass Licht in den zweiten Bereichen jedenfalls absorbiert wird, auch wenn das Ursprungsmaterial transparent ist. Die zweite Brechzahl N2 ist dem transparenten Anteil zuzuordnen. Zusätzlich zu den ersten und zweiten Bereichen sind zwischen jeweils zwei zweiten Bereichen, wie besonders Fig. 27c zeigt, dritte Bereiche aus einem weiteren opaken Material M3 mit einer dritten Brechzahl N3 ausgebildet. Dabei ist die dritte Brechzahl N3 jeweils größer als die erste Brechzahl N1 und als die zweite Brechzahl N2. Das weitere opake Material M3 besitzt ebenfalls einen transparenten Anteil, welcher die dritte Brechzahl N3 bestimmt, sowie einen Anteil absorbierender Partikel, welcher für die Opazität sorgt. Der Masseanteil absorbierender Partikel im zweiten opaken Material M2 und im weiteren opaken Material M3 kann bis zu 50 % betragen, im Einzelfall auch mehr. Bei der Verwendung des Weiteren opaken Materials M3 kann der Masseanteil der absorbierenden Partikel im zweiten opaken Material M2 auch deutlich geringer sein als 50 %. Die Partikel sind beispielsweise in den dritten Bereichen M3 in Fig. 28 symbolisiert.

Wie in Fig. 27a und Fig. 27b gezeigt, können zweite Bereiche E2 aus dem zweiten opaken Material M2 mit der zweiten Brechzahl N2 ebenfalls zwischen der Lichteintrittsseite des optischen Elements 10 und den dritten Bereichen aus dem weiteren opaken Material M3 einerseits und zwischen der Lichtaustrittsseite des optischen Elements 10 und den Lichtaustrittsflächen der ersten Bereiche E1 aus dem ersten transparenten Material M1 ausgebildet sein. Dies ist in der Herstellung einfacher, da es sich dann um eine in der Fläche durchgehende, geschlossene Schicht aus dem weiteren opaken Material handelt. Die ersten und zweiten Bereiche aus dem ersten transparenten Material M1 und dem zweiten opaken Material M2 können im Querschnitt auch trapezförmig ausgebildet sein, wie in Fig. 28 dargestellt. Die Trapezform der ersten Bereiche E1, welche auch in den Varianten ohne ein weiteres opakes Material einsetzbar ist, hat den Vorteil, dass die Winkelverteilung dadurch noch besser fokussiert wird und so der Privacy-/Sichtschutz-Modus weiter verbessert wird, wenn das dritte optische Element 10 in einer entsprechenden Bildwiedergabeeinrichtung verwendet wird. In Fig. 27a ist zusätzlich an der Lichteintrittsfläche des optischen Elements 10 noch eine Spiegelschicht M4 zwischen dem Substrat und solchen zweiten Bereichen aufgebracht, welche zwischen dem Substrat und den dritten Bereichen aus dem dritten Material M3 angeordnet sind. Die zweiten Bereiche können in dieser Ausgestaltung insbesondere als Film, also wesentlich dünner als die ersten und dritten Bereiche, ausgedehnt sein, insbesondere an den Lichtaustrittsflächen der ersten Bereiche.

Die Brechzahlen N1, N2 und N3 sind so ausgestaltet, dass zwischen dem ersten Material M1 mit der ersten Brechzahl N1 und dem zweiten Material M2 mit der zweiten Brechzahl N2 eine Totalreflexion für bestimmte, kleine Winkel erfolgt, d.h. die zweite Brechzahl N2 ist kleiner als die erste Brechzahl N1. Vorzugsweise ist der Betrag des Brechzahlunterschieds zwischen der ersten Brechzahl N1 und der zweiten Brechzahl N2 kleiner als 0,1. Die dritte Brechzahl N3 des weiteren, dritten Materials M3, welches - wie auch das zweite Material M2 - mit absorbierenden Materialien versetzt ist, ist größer als die erste und als die zweite Brechzahl oder gleich diesen, jedoch nicht kleiner. Das führt dazu, dass Lichtstrahlen, welche nicht an der Grenzfläche zwischen erstem Material M1 und drittem Material M3 totalreflektiert werden, an der Grenzfläche zwischen drittem Material und zweitem Material zu größeren Winkeln gebrochen werden.

Dies ist in Fig. 29 und Fig. 30 für verschiedene Fälle dargestellt. Im Fall A werden Lichtstrahlen von der reflektierenden Schicht zurückgespiegelt und dann in einer - nicht dargestellten - Backlight-Einheit recycelt. Im Fall B für Lichtstrahlen mit kleinen Einfallswinkeln werden diese entweder an den Grenzflächen zwischen den ersten und zweiten Bereichen totalreflektiert oder passieren ungehindert das optische Element 10 durch die ersten Bereiche. Dies entspricht in Fig. 30 dem Bereich zwischen dem Ursprung und der ersten gestrichelten Linie auf der Abszisse. Einfallswinkel und Ausfallswinkel sind vom Betrag her identisch.

Für Lichtstrahlen, die mit Winkeln in die ersten Bereiche eintreten, die größer als der Winkel der Totalreflexion an der Grenzfläche zwischen erstem und zweitem Bereich ist, müssen zwei Fälle in Abhängigkeit vom Einfallswinkel unterschieden werden. Im Fall C - nur zur Unterscheidung der Strahlführung mit dem Fall D gestrichelt gezeichnet - fallen werden die Strahlen an der Grenzfläche zwischen ersten und zweiten Bereichen zu kleineren Winkeln gebrochen und verlassen das optische Element an einer Lichtaustrittsfläche eines zweiten Bereichs. Dies betrifft - je nach Dicke des zweiten Bereichs - nur einen eher kleinen Winkelbereich. Im Fall D treten Strahlen mit noch größeren Einfallswinkeln vom ersten Bereich zunächst in den zweiten und von dort in den dritten Bereich und werden beim Auftreffen auf die Grenzfläche zwischen dem zweiten und dem dritten Bereich zu größeren Winkeln hin gebrochen. Im Idealfall entsteht so ein Winkelbereich, in dem es kein oder deutlich weniger Licht gibt als im Fall ohne dritte Bereiche, wodurch der Privacy-Modus weiter verbessert wird.

Einige der weiter oben für das erste optische Element 1 beschriebenen Variationen können auch auf das zweite optische Element 2 und das dritte optische Element 10 angewendet werden.

Die vorstehend beschriebenen optischen Elemente lösen die gestellte Aufgabe: Es wurden optische Elemente beschrieben, welche einfallendes Licht in seinen Ausbreitungsrichtungen definiert beeinflussen und welche optional zwischen mindestens zwei Betriebszuständen umschalten können. Jedes optische Element ist preiswert umsetzbar und insbesondere mit verschiedenartigen Bildschirmtypen universell verwendbar, um eine Umschaltung zwischen einem Sichtschutz- und einem freien Betrachtungsmodus zu ermöglichen, wobei die Auflösung eines solchen Bildschirms im Wesentlichen nicht oder nur vernachlässigbar herabgesetzt wird. Ferner bieten die optischen Elemente die Möglichkeit, eine Top-Hat-Lichtverteilung zu erzielen.

Die Vorteile der Erfindung sind vielseitig. So werden die genannten Wirkungsweisen mit einem einzigen optischen Element erzeugt, welches nicht notwendigerweise über Oberflächenstrukturierungen verfügen muss. Ferner können die ersten und zweiten Bereiche B1 und B2 des optischen Elements in Schutzmaterial eingebettet werden, z.B. in das Material der ersten Bereiche B1. Überdies wird die sehr bevorzugte Top-Hat-Verteilung beim ausfallenden Licht erreicht und in der theoretischen Simulation wird ein beliebig hoher Privacy-Kontrast erzielt. Im Falle der Anwendung eines erfindungsgemäßen optischen Elements in einer Hintergrundbeleuchtung für ein LCD-Panel wird eine hohe Beleuchtungsdichte erzielt. Außerdem ist mit nur einem optischen Element die Lichtausbreitungsbeschränkung in zwei Ebenen, z.B. gleichzeitig links/rechts und oben/unten, möglich.

Die vorangehend beschriebene Erfindung kann im Zusammenspiel mit einer Bildwiedergabeeinrichtung vorteilhaft überall da angewendet werden, wo vertrauliche Daten angezeigt und/oder eingegeben werden, wie etwa bei der PIN-Eingabe oder zur Datenanzeige an Geldautomaten oder Zahlungsterminals oder zur Passworteingabe oder beim Lesen von Emails auf mobilen Geräten. Die Erfindung kann auch im PKW angewendet werden, etwa wenn der Fahrer wahlweise bestimmte Bildinhalte des Beifahrers, wie etwa Unterhaltungsprogramme, nicht sehen darf. Ferner kann das erfindungsgemäße optische Element für noch andere technische und kommerzielle Zwecke eingesetzt werden, etwa für die Lichtausrichtung einer Dunkelfeldbeleuchtung für Mikroskope, und ganz allgemein zur Lichtformung für Beleuchtungen wie etwa bei Scheinwerfern sowie in der Messtechnik.

## Patentansprüche

1. Flächig ausgedehntes optisches Element (1) mit einer Lichteintrittsseite und einer Lichtaustrittsseite, umfassend
- mindestens aus einem ersten transparenten Material mit einer ersten Brechzahl (N1) bestehende erste Bereiche (B1) und aus einem zweiten transparenten Material mit einer zweiten Brechzahl (N2) bestehende zweite Bereiche (B2), die sich über die Fläche des ersten optischen Elements (1) in einer ein- oder zweidimensionalen periodischen Abfolge abwechseln, wobei die erste Brechzahl (N1) im gesamten für ein menschliches Auge sichtbaren Wellenlängenbereich größer ist als die zweite Brechzahl (N2),
- jeweils eine permanent opake oder zwischen einem transparenten und einem opaken Zustand schaltbare erste Schicht (OB) an einer Lichteintrittsfläche jedes der zweiten Bereiche (B2),
- jeweils eine permanent opake oder zwischen einem transparenten und einem opaken Zustand schaltbare zweite Schicht (AB) an einer Lichtaustrittsfläche jedes der zweiten Bereiche (B2),
- wobei entweder jede erste Schicht (OB) oder jede zweite Schicht (AB), oder jede erste Schicht (OB) und jede zweite Schicht (AB) permanent opak sind,
- so dass an der Lichteintrittsseite auf das optische Element (1) auftreffendes Licht aufgrund der ersten Schichten (OB), wenn diese in einem opaken Zustand sind, ausschließlich durch die Lichteintrittsflächen der ersten Bereiche (B1) in das optische Element (1) einfällt, und dort je nach Einfallswinkel, Polarisation und dem Verhältnis der ersten Brechzahl (N1) zu der zweiten Brechzahl (N2)
a) innerhalb eines ersten Bereiches (B1) ungehindert propagiert oder totalreflektiert wird und hernach an einer Lichtaustrittsfläche des entsprechenden ersten Bereiches (B1) wieder ausgekoppelt wird, oder
b) von dem ersten Bereich (B1) in einen angrenzenden zweiten Bereich (B2) eindringt, in diesem propagiert und schließlich an dessen Lichtaustrittsseite absorbiert wird, wenn die zweite Schicht (AB) im opaken Zustand ist, oder ausgekoppelt wird, wenn die zweite Schicht (AB) im transparenten Zustand ist, oder
c) falls das Licht von dem ersten Bereich (B1) in den angrenzenden zweiten Bereich (B2) eingedrungen ist, wiederum in einen weiteren benachbarten ersten Bereich (B1) eindringt und je nach dann gegebener Ausbreitungsrichtung und Polarisation an der Lichtaustrittsfläche ausgekoppelt wird oder weiter im optischen Element (1) propagiert, bis es entweder ausgekoppelt oder absorbiert wird,
- wodurch das an der Lichtaustrittsseite aus dem optischen Element (1) austretende Licht gegenüber dem an der Lichteintrittsseite auf das optische Element (1) auftreffende Licht in seinen Ausbreitungsrichtungen eingeschränkt ist, sofern mindestens die erste Schicht (OB) und/oder die zweite Schicht (AB) opak ist,
- wobei jede erste Schicht (OB) an den Lichteintrittsflächen der zweiten Bereiche (B2) durch eine permanente Absorberschicht und/oder durch mindestens eine vom optischen Element weg spiegelnde Schicht ausgebildet ist und/oder
- jede zweite Schicht (AB) an der Lichtaustrittsfläche der zweiten Bereiche (B2) durch eine permanente Absorberschicht ausgebildet ist.

2. Optisches Element (1) nach einem der vorgenannten Ansprüche, **dadurch gekennzeichnet, dass** die erste Brechzahl (N1) des Materials in den ersten Bereichen (B1) und/oder die zweite Brechzahl (N2) des Materials in den zweiten Bereichen (B2) zwischen mindestens zwei Zuständen umschaltbar ist, so dass das Verhältnis der beiden Brechzahlen (N1, N2) an den Grenzen zwischen den ersten Bereichen (B1) und den zweiten Bereichen (B2) jeweils modulierbar sind, wodurch die besagte Einschränkung der Ausbreitungsrichtungen variierbar ist.

3. Optisches Element (1) nach Anspruch 2, **dadurch gekennzeichnet, dass** mindestens eines der Materialien der ersten Bereiche (B1) und/oder der zweiten Bereiche (B2) aus Flüssigkristallen besteht, die mit Elektroden in Kontakt stehen, um über eine Änderung der Spannung an den Elektroden eine Brechzahländerung für linear polarisiertes Licht in den Flüssigkristallen herbeizuführen.

4. Optisches Element (1) nach einem der vorgenannten Ansprüche, **dadurch gekennzeichnet, dass** die Umschaltbarkeit der zwischen einem opaken und einem transparenten Zustand umschaltbaren ersten und zweiten Schichten auf einem oder mehreren der folgenden Prinzipien basiert: Elektrobenetzung, Elektrophorese, Elektrochromie und/oder Flüssigkristallzellen.

5. Optisches Element (1) nach einem der vorgenannten Ansprüche, **dadurch gekennzeichnet, dass** die zweiten Schichten (AB) und/oder die ersten Schichten (OB) in das Material, aus dem die ersten Bereiche (B1) bestehen, eingebettet sind, wobei bevorzugt der Materialanteil der ersten Bereiche (B1) des optischen Elements (1) nahtlos in den besagten, die zweiten Schichten (AB) und/oder die ersten Schichten (OB) einbettenden Anteil übergeht.

6. Verfahren zur Herstellung eines optischen Elements (1) nach einem der vorgenannten Ansprüche 1 bis 5, umfassend die folgenden Schritte:
- Herstellen einer Form, welche eine Positivstruktur von ersten Bereichen (B1) sowie die Negativstruktur eines Trägersubstrates aufweist,
- Füllen der Form mit einem ersten Polymer, welches nach Aushärten eine erste Brechzahl (N1) aufweist,
- Aushärten des ersten Polymers durch UV-Licht oder Abkühlen und nachfolgendes Entfernen des Werkstückes aus der Form,
- Füllen von Strukturen von zweiten Bereichen (B2) im Werkstück mit einem zweiten Polymer, welches nach Aushärten eine zweite Brechzahl (N2) aufweist,
- Aushärten des zweiten Polymers durch UV-Licht oder Abkühlen.

7. Verfahren zur Herstellung eines optischen Elements nach einem der Ansprüche 1 bis 5, umfassend die folgenden Schritte:
- Erzeugen mehrerer Basisblöcke (BL), die in dieser Reichenfolge folgende miteinander verbundene Schichten beinhalten: eine als Absorberschicht wirkende zweite Schicht (AB), eine zweite transparente Schicht aus einem Material mit einer zweiten Brechzahl (N2), eine opake erste Schicht (OB) sowie eine erste transparente Schicht aus einem Material mit einer ersten Brechzahl (N1),
- Stapeln mehrerer Basisblöcke (BL) übereinander und Verbinden dieser, um einen ersten Stapelblock (ST) zu erhalten,
- Abschneiden von Scheiben (SC) mit einer zweiten Schichtdicke (D2) aus dem Stapelblock (ST),
- Stapeln von Scheiben (SC) mit jeweils dazwischenliegenden ersten transparenten Schichten mit der ersten Brechzahl (N1) und einer ersten Schichtdicke (D1) und Verbinden dieser, um einen zweiten Stapelblock (SN) zu erhalten, sowie
- Abschneiden von optischen Elementen (1) aus dem zweiten Stapelblock (SN).

8. Flächig ausgedehntes optisches Element (10) mit einer Lichteintrittsseite und einer Lichtaustrittsseite, umfassend
- mindestens aus einem transparenten Material mit einer ersten Brechzahl (N1) bestehende erste Bereiche (E1) und aus einem permanent opaken Material mit einer zweiten Brechzahl (N2) bestehende zweite Bereiche (E2), die sich über die Fläche des optischen Elements (10) in einer ein- oder zweidimensionalen periodischen Abfolge abwechseln, wobei die erste Brechzahl (N1) im gesamten für ein menschliches Auge sichtbaren Wellenlängenbereich größer ist als die zweite Brechzahl (N2),
- wobei die ersten Bereiche (E1) und die zweiten Bereiche (E2) bei Betrachtung in Schnittrichtung senkrecht zur oberen Oberfläche des optischen Elements (10) trapezförmig ausgebildet sind, und mindestens die ersten Bereiche (E1) jeweils einen Querschnitt eines gleichschenkligen Trapezes aufweisen, wobei die längere Grundseite des Trapezes einer Lichtaustrittsfläche eines entsprechenden ersten Bereichs (E1) entspricht,
- so dass an einer ersten Großfläche des optischen Elements (10) auf dieses auftreffende Licht aufgrund des opaken Materials der zweiten Bereiche (E2) ausschließlich durch Lichteintrittsflächen der ersten Bereiche (E1) in das optische Element (10) einfällt, und dort je nach geometrischer Einfallrichtung, Polarisation und dem Verhältnis der ersten Brechzahl (N1) zu der zweiten Brechzahl (N2)
a) innerhalb eines ersten Bereiches (E1) ungehindert propagiert oder totalreflektiert wird und hernach an der Lichtaustrittsfläche des entsprechenden ersten Bereiches (E1) wieder ausgekoppelt wird, oder
b) von dem ersten Bereich (E1) in einen angrenzenden zweiten Bereich (E2) eindringt und dort aufgrund des opaken Materials der zweiten Bereiche (E2) absorbiert wird,
- wobei aufgrund der unterschiedlichen ersten Brechzahlen (N1) und zweiten Brechzahlen (N2) in zweite Bereiche (E2) eindringende Strahlen stärker vom Lot weg gebrochen werden,
- wodurch das an der an einer zweiten Großfläche des optischen Elements (10) aus diesem austretende Licht gegenüber dem an der ersten Großfläche auf das optische Element (10) auftreffende Licht in seinen Ausbreitungsrichtungen eingeschränkt ist.

9. Optisches Element (10) nach Anspruch 8, **dadurch gekennzeichnet, dass** das opake Material aus einem transparenten Material mit der zweiten Brechzahl (N2) besteht, welches mit absorbierenden Partikeln versetzt ist, wodurch insgesamt eine opake Wirkung zustande kommt.

10. Optisches Element (10) nach einem der Ansprüche 8 oder 9, **dadurch gekennzeichnet, dass** zwischen jeweils zwei zweiten Bereichen (E2) dritte Bereiche aus einem weiteren opaken Material (M3) mit einer dritten Brechzahl (N3) ausgebildet sind, wobei die dritte Brechzahl (N3) jeweils größer als die erste Brechzahl (N1) und größer als die zweite Brechzahl (N2) ist.

11. Optisches Element (1) nach einem der Ansprüche 1 bis 5, **dadurch gekennzeichnet, dass** die ersten Bereiche (B1) und die zweiten Bereiche (B2) bei Betrachtung in Schnittrichtung senkrecht zur oberen Oberfläche des optischen Elements (1) trapezförmig ausgebildet sind.

12. Verfahren zur Herstellung eines optischen Elements (10) nach einem der Ansprüche 8 oder 9, umfassend die folgenden Schritte:
- abwechselndes Stapeln von ersten, aus einem transparenten Material bestehenden Schichten mit einer ersten Brechzahl (N1), und zweiten, aus einem opaken Material bestehenden Schichten mit einer zweiten Brechzahl (N2), wobei die erste Brechzahl (N1) größer als die zweite Brechzahl (N2) ist,
- Verbinden der ersten und zweiten Schichten miteinander,
- Abschneiden von optischen Elementen (10) aus dem Schichtverbund.

13. Verwendung eines optischen Elements (1, 10) nach einem der Ansprüche 1 bis 5 oder 8 bis 11 mit einer Bildwiedergabeeinheit (3) oder mit einer Hintergrundbeleuchtung (BLU) für eine transmissive Bildwiedergabeeinheit (LCD) zur wahlweisen Beschränkung der Betrachtungsrichtungen der Bildwiedergabeeinheit (3, LCD).

## Claims

1. Two-dimensionally extensive optical element (1) having a light entry side and a light exit side, comprising
- at least first regions (B1) comprising a first transparent material with a first refractive index (N1) and second regions (B2) comprising a second transparent material with a second refractive index (N2) which alternate over the surface of the first optical element (1) in a one-dimensional or two-dimensional periodic sequence, wherein the first refractive index (N1) is higher than the second refractive index (N2) within the entire wavelength range visible to the human eye,
- in each instance, a first layer (OB) at a light entry surface of each of the second regions (B2), which first layer (OB) is permanently opaque or is switchable between a transparent state and an opaque state,
- in each instance, a second layer (AB) at a light exit surface of each of the second regions (B2), which second layer (AB) is permanently opaque or is switchable between a transparent state and an opaque state,
- with either each first layer (OB), or each second layer (AB), or each first layer (OB) and each second layer (AB) being permanently opaque,
- such that, owing to the first layers (OB), light impinging on the optical element (1) on the light entry side is incident in the optical element (1) exclusively through the light entry surfaces of the first regions (B1) when the first layers (OB) are in an opaque state and, depending on the incident angle, polarization and the ratio of the first refractive index (N1) to the second refractive index (N2),
a) is propagated unimpeded or is totally internally reflected inside of a first region (B1) and is thereafter coupled out again at a light exit surface of the corresponding first region (B1), or
b) penetrates from the first region (B1) into an adjoining second region (B2) , propagates in the latter and is ultimately absorbed at the light exit side thereof when the second layer (AB) is in the opaque state or is coupled out when the second layer (AB) is in the transparent state, or
c) in case the light has penetrated from the first region (B1) into the adjoining second region (B2), penetrates in turn into a further, adjacent, first region (B1) and, depending on the propagation direction and polarization which then exist, is coupled out at the light exit surface or propagated further in the optical element (1) until it is either coupled out or absorbed,
- as a result of which the propagation directions of the light exiting from the optical element (1) at the light exit side are limited compared to the light impinging on the optical element (1) at the light entry side insofar as at least the first layer (OB) and/or the second layer (AB) is opaque,
- wherein every first layer (OB) is formed at the light exit surfaces of the second regions (B2) by a permanent absorber layer and/or by at least one layer reflecting away from the optical element (1) and/or
- every second layer (AB) is formed at the light exit surface of the second regions (B2) by a permanent absorber layer.

2. Optical element (1) according to one of the preceding claims, **characterized in that** the first refractive index (N1) of the material in the first regions (B1) and/or the second refractive index (N2) of the material in the second regions (B2) are/is switchable between at least two states such that the ratio of the two refractive indices (N1, N2) at the boundaries between the first regions (B1) and the second regions (B2) can be modulated in each instance, as a result of which the above-mentioned limiting of the propagation directions is variable.

3. Optical element (1) according to claim 2, **characterized in that** at least one of the materials of the first regions (B1) and/or second regions (B2) comprises liquid crystals which are in contact with electrodes in order to bring about a change in the refractive index for linearly polarized light in the liquid crystals via a change in the voltage at the electrodes.

4. Optical element (1) according to one of the preceding claims, **characterized in that** the switchability of the first and second layers, which are switchable between an opaque state and a transparent state, is based on one or more of the following principles: electrowetting, electrophoresis, electrochromism and/or liquid crystal cells.

5. Optical element (1) according to one of the preceding claims, **characterized in that** the second layers (AB) and/or the first layers (OB) are embedded in the material from which the first regions (B1) are composed, wherein the material component of the first regions (B1) of the optical element (1) transitions seamlessly into the above-mentioned component in which the second layers (AB) and/or the first layers (OB) are embedded.

6. Method for producing an optical element (1) according to one of the preceding claims 1 to 5, comprising the following steps:
- producing a mold having a positive structure of first regions (B1) and the negative structure of a carrier substrate,
- filling the mold with a first polymer which has a first refractive index (N1) after setting,
- curing the first polymer by UV light or by cooling and subsequently removing the workpiece from the mold,
- filling structures of second regions (B2) in the workpiece with a second polymer which has a second refractive index (N2) after setting,
- curing the second polymer by UV light or by cooling.

7. Method for producing an optical element according to one of claims 1 to 5, comprising the following steps:
- generating a plurality of base blocks (BL) contain layers connected to one another in the following sequence: a second layer (AB) acting as absorber layer, a second transparent layer comprising a material with a second refractive index (N2), an opaque first layer (OB), and a first transparent layer comprising a material with a first refractive index (N1),
- stacking a plurality of base blocks (BL) one above the other and connecting them in order to obtain a first stack block (ST),
- cutting disks (SC) with a second layer thickness (D2) from the stack block (ST),
- stacking disks (SC) with first transparent layers having the first refractive index (N1) and a first layer thickness (D1) which are interposed between the disks (SC) and connecting them in order to obtain a second stack block (SN), and
- cutting optical elements (1) from the second stack block (SN).

8. Two-dimensionally extensive optical element (10) having a light entry side and a light exit side, comprising
- at least first regions (E1) comprising a transparent material with a first refractive index (N1) and second regions (E2) comprising a permanently opaque material with a second refractive index (N2) which alternate over the surface of the optical element (10) in a one-dimensional or two-dimensional periodic sequence, wherein the first refractive index (N1) is higher than the second refractive index (N2) within the entire wavelength range visible to the human eye,
- wherein the first regions (E1) and the second regions (E2) when viewed in sectional direction perpendicular to the upper surface of the optical element (10) are trapezoid-shaped, and at least the first regions (E1) each have a cross-section of an isosceles trapezoid, wherein the longer base of the trapezoid corresponds to a light exit surface of a corresponding first region (E1),
- so that, owing to the opaque material of the second regions (E2), light impinging on the optical element (10) is incident in the optical element (10) at a first large-area surface thereof exclusively through light entry surfaces of the first regions (E1) and, depending on the geometric direction of incidence, polarization and the ratio of the first refractive index (N1) to the second refractive index (N2),
a) propagates unimpeded or is totally internally reflected inside of a first region (E1) and is thereafter coupled out again at the light exit surface of the corresponding first region (E1), or
b) penetrates from the first region (E1) into an adjoining second region (E2), where it is absorbed because of the opaque material of the second regions (E2),
- wherein, owing to the different first refractive indices (N1) and second refractive indices (N2), rays penetrating into second regions (E2) are refracted more strongly away from the perpendicular,
- as a result of which the light exiting from the optical element (10) at a second large-area surface of the optical element (10) is limited with respect to its propagation directions compared to the light impinging on the optical element (10) at the first large-area surface of the optical element (10).

9. Optical element (10) according to claim 8, **characterized in that** the opaque material comprises a transparent material with the second refractive index (N2) which is mixed with an absorbent material, as a result of which an opaque effect is brought about overall.

10. Optical element (10) according to one of claims 8 or 9, **characterized in that** third regions comprising a further opaque material (M3) with a third refractive index (N3) are formed between every two second regions (E2), wherein the third refractive index (N3) is higher than the first refractive index (N1) and higher than the second refractive index (N2).

11. Optical element (1) according to one of claims 1 to 5, **characterized in that** the first regions (B1) and the second regions (B2) when viewed in sectional direction perpendicular to the upper surface of the optical element (1) are trapezoid-shaped.

12. Method for producing an optical element (10) according to one of claims 8 or 9, comprising the following steps:
- first layers with a first refractive index (N1) comprising a transparent material and second layers with a second refractive index (N2) comprising an opaque material are stacked in an alternating manner, wherein the first refractive index is higher than the second refractive index,
- the first layers and second layers are connected to one another,
- optical elements (10) are cut from the layer composite.

13. Use of an optical element (1, 10) according to one of claims 1 to 5 or 8 to 11 with a display unit (3) or with a backlight (BLU) for a transmissive display unit (LCD) for selectively limiting the viewing directions of the display unit (3, LCD).

## Revendications

1. Élément optique étendu (1) avec un côté d'entrée de lumière et un côté de sortie de lumière, comprenant
- au moins des premières zones (B1) constituées d'un premier matériau transparent ayant un premier indice de réfraction (N1) et des deuxièmes zones (B2) constituées d'un deuxième matériau transparent ayant un deuxième indice de réfraction (N2), qui alternent sur la surface du premier élément optique (1) selon une succession périodique à une ou deux dimensions, le premier indice de réfraction (N1) étant supérieur au deuxième indice de réfraction (N2) dans l'ensemble de la gamme de longueurs d'onde visible par l'œil humain,
- une première couche (OB) respective, opaque en permanence ou commutable entre un état transparent et un état opaque, sur une surface d'entrée de lumière de chacune des deuxièmes zones (B2),
- une deuxième couche (AB) opaque en permanence ou commutable entre un état transparent et un état opaque sur une surface de sortie de lumière de chacune des deuxièmes zones (B2),
- soit chaque première couche (OB) ou chaque deuxième couche (AB), soit chaque première couche (OB) et chaque deuxième couche (AB) sont opaques en permanence,
- de sorte que la lumière incidente sur l'élément optique (1) sur le côté d'entrée de la lumière, en raison des premières couches (OB), lorsque celles-ci sont dans un état opaque, pénètre dans l'élément optique (1) exclusivement par les surfaces d'entrée de lumière des premières zones (B1) et, là, en fonction de l'angle d'incidence, de la polarisation et du rapport entre le premier indice de réfraction (N1) et le deuxième indice de réfraction (N2),
a) se propage sans encombre ou est totalement réfléchie dans une première zone (B1), puis est découplée au niveau d'une surface de sortie de lumière de la première zone correspondante (B1), ou
b) pénètre de la première zone (B1) dans une deuxième zone adjacente (B2), se propage dans celle-ci et est finalement absorbé au niveau de son côté de sortie de lumière lorsque la deuxième couche (AB) est à l'état opaque, ou est découplé lorsque la deuxième couche (AB) est à l'état transparent, ou
c) si la lumière provenant de la première zone (B1) a pénétré dans la deuxième zone adjacente (B2), elle pénètre à nouveau dans une autre première zone voisine (B1) et, en fonction de la direction de propagation et de la polarisation alors données, elle est découplée au niveau de la surface de sortie de la lumière ou continue à se propager dans l'élément optique (1) jusqu'à ce qu'elle soit soit découplée, soit absorbée,
- ce qui limite les directions de propagation de la lumière sortant de l'élément optique (1) sur le côté de sortie de lumière par rapport à la lumière incidente sur l'élément optique (1) sur le côté d'entrée de lumière, dans la mesure où au moins la première couche (OB) et/ou la deuxième couche (AB) est opaque,
- chaque première couche (OB) étant formée, au niveau des surfaces d'entrée de lumière des deuxièmes zones (B2), par une couche absorbante permanente et/ou par au moins une couche réfléchissante s'éloignant de l'élément optique, et/ou chaque deuxième couche (AB) étant formée, au niveau de la surface de sortie de lumière des deuxièmes zones (B2), par une couche absorbante permanente.

2. Élément optique (1) selon l'une quelconque des revendications précédentes, **caractérisé en ce que** le premier indice de réfraction (N1) du matériau dans les premières zones (B1) et/ou le deuxième indice de réfraction (N2) du matériau dans les deuxièmes zones (B2) peuvent être commutés entre au moins deux états, de sorte que le rapport entre les deux indices de réfraction (N1, N2) aux limites entre les premières zones (B1) et les deuxièmes zones (B2) est modulable dans chaque cas, ce qui permet de faire varier ladite restriction des directions de propagation.

3. Élément optique (1) selon la revendication 2, **caractérisé en ce qu'**au moins l'un des matériaux des premières zones (B1) et/ou des deuxièmes zones (B2) est constitué de cristaux liquides qui sont en contact avec des électrodes afin de provoquer, par une modification de la tension aux électrodes, une modification de l'indice de réfraction pour la lumière polarisée linéairement dans les cristaux liquides.

4. Élément optique (1) selon l'une quelconque des revendications précédentes, **caractérisé en ce que** la commutabilité des première et deuxième couches commutables entre un état opaque et un état transparent repose sur un ou plusieurs des principes suivants :
électro-humidification, électrophorèse, électrochromie et/ou cellules à cristaux liquides.

5. Élément optique (1) selon l'une quelconque des revendications précédentes, **caractérisé en ce que** les deuxièmes couches (AB) et/ou les premières couches (OB) sont intégrées dans le matériau dont sont constituées les premières zones (B1), la partie en matériau des premières zones (B1) de l'élément optique (1) se fondant, de préférence, de manière continue dans ladite proportion intégrant les deuxièmes couches (AB) et/ou les premières couches (OB).

6. Procédé de fabrication d'un élément optique (1) selon l'une quelconque des revendications 1 à 5 précitées, comprenant les étapes suivantes :
- fabrication d'un moule présentant une structure positive de premières zones (B1) ainsi que la structure négative d'un substrat de support,
- remplissage du moule avec un premier polymère qui, après durcissement, présente un premier indice de réfraction (N1),
- durcissement du premier polymère par rayonnement UV ou refroidissement, puis retrait de la pièce du moule,
- remplissage des structures des deuxièmes zones (B2) dans la pièce à usiner avec un deuxième polymère qui, après durcissement, présente un deuxième indice de réfraction (N2),
- durcissement du deuxième polymère par rayonnement UV ou refroidissement.

7. Procédé de fabrication d'un élément optique (1) selon l'une quelconque des revendications 1 à 5, comprenant les étapes suivantes :
- création de plusieurs blocs de base (BL) qui contiennent, dans cet ordre, les couches suivantes reliées entre elles : une deuxième couche (AB) agissant comme couche absorbante, une deuxième couche transparente constituée d'un matériau ayant un deuxième indice de réfraction (N2), une première couche opaque (OB) ainsi qu'une première couche transparente constituée d'un matériau ayant un premier indice de réfraction (N1),
- empilement de plusieurs blocs de base (BL) les uns sur les autres et les assembler pour obtenir un premier bloc empilé (ST),
- découpe de tranches (SC) d'une deuxième épaisseur (D2) à partir du bloc empilé (ST),
- empilement de tranches (SC) avec entre eux des premières couches transparentes ayant le premier indice de réfraction (N1) et une première épaisseur de couche (D1) et
assemblage de ceux-ci pour obtenir un deuxième bloc empilé (SN) et découpe d'éléments optiques (1) à partir du deuxième bloc empilé (SN).

8. Élément optique étendu (10) avec un côté d'entrée de lumière et un côté de sortie de lumière, comprenant
- au moins des premières zones (E1) constituées d'un matériau transparent ayant un premier indice de réfraction (N1) et des deuxièmes zones (E2) constituées d'un matériau opaque en permanence ayant un deuxième indice de réfraction (N2), qui alternent sur la surface de l'élément optique (10) selon une séquence périodique unidimensionnelle ou bidimensionnelle, le premier indice de réfraction (N1) étant supérieur au deuxième indice de réfraction (N2) dans l'ensemble de la plage de longueurs d'onde visible par l'œil humain,
- les premières zones (E1) et les deuxièmes zones (E2) étant de forme trapézoïdale lorsqu'on les observe dans le sens de la coupe perpendiculairement à la surface supérieure de l'élément optique (10), et au moins les premières zones (E1) présentant chacune une section transversale en forme de trapèze isocèle, la base la plus longue du trapèze correspondant à une surface de sortie de lumière d'une première zone (E1) correspondante,
- de sorte que, sur une première grande surface de l'élément optique (10), la lumière qui frappe celui-ci pénètre dans l'élément optique (10) exclusivement par des surfaces d'entrée de lumière des premières zones (E1) en raison du matériau opaque des deuxièmes zones (E2), et y, en fonction de la direction géométrique d'incidence, de la polarisation et du rapport entre le premier indice de réfraction (N1) et le deuxième indice de réfraction (N2),
a) se propage sans encombre ou est totalement réfléchie dans une première zone (E1), puis est à nouveau découplée au niveau de la surface de sortie de lumière de la première zone correspondante (E1), ou
b) pénètre de la première zone (E1) dans une deuxième zone adjacente (E2) et y est absorbée en raison du matériau opaque de la deuxième zone (E2),
- des rayons pénétrant dans des deuxièmes zones (E2) étant davantage déviés de la perpendiculaire en raison des différences entre les premiers indices de réfraction (N1) et les deuxièmes indices de réfraction (N2),
- ce qui limite les directions de propagation de la lumière sortant de l'élément optique (10) au niveau d'une deuxième grande surface de celui-ci par rapport à la lumière incidente sur l'élément optique (10) au niveau de la première grande surface.

9. Élément optique (10) selon la revendication 8, **caractérisé en ce que** le matériau opaque est constitué d'un matériau transparent ayant le deuxième indice de réfraction (N2), qui est mélangé à des particules absorbantes, ce qui produit un effet opaque global.

10. Élément optique (10) selon l'une quelconque des revendications 8 ou 9, **caractérisé en ce que** des troisièmes zones constituées d'un autre matériau opaque (M3) ayant un troisième indice de réfraction (N3) sont formées entre deux deuxièmes zones (E2) respectives, le troisième indice de réfraction (N3) étant respectivement supérieur au premier indice de réfraction (N1) et supérieur au deuxième indice de réfraction (N2).

11. Élément optique (1) selon l'une quelconque des revendications 1 à 5, **caractérisé en ce que** les premières zones (B1) et les deuxièmes zones (B2) sont de forme trapézoïdale lorsqu'on les observe dans le sens de la coupe perpendiculairement à la surface supérieure de l'élément optique (1).

12. Procédé de fabrication d'un élément optique (10) selon l'une quelconque des revendications 8 ou 9, comprenant les étapes suivantes :
- empilement alterné de premières couches constituées d'un matériau transparent ayant un premier indice de réfraction (N1) et de deuxièmes couches constituées d'un matériau opaque ayant un deuxième indice de réfraction (N2), le premier indice de réfraction (N1) étant supérieur au deuxième indice de réfraction (N2),
- assemblage des première et deuxième couches entre elles,
- découpe d'éléments optiques (10) à partir du composite stratifié.

13. Utilisation d'un élément optique (1, 10) selon l'une quelconque des revendications 1 à 5 ou 8 à 11 avec une unité de reproduction d'images (3) ou avec un rétroéclairage (BLU) pour une unité de reproduction d'images transmissive (LCD) afin de limiter de manière sélective les directions d'observation de l'unité de reproduction d'images (3, LCD).
